(19) Europäisches Patentamt
European Patent Office
Office européen des brevets

(11) EP 2 169 010 A2

(12) **EUROPEAN PATENT APPLICATION**

(43) Date of publication:
**31.03.2010 Bulletin 2010/13**

(21) Application number: **09012394.4**

(22) Date of filing: **30.09.2009**

(51) Int Cl.:
*C09B 67/20* (2006.01) *C09B 57/00* (2006.01)
*C09B 19/02* (2006.01) *C09B 1/20* (2006.01)
*C09B 29/33* (2006.01) *C09B 1/00* (2006.01)
*C09B 7/00* (2006.01) *C09B 48/00* (2006.01)
*C09B 33/153* (2006.01) *C09B 29/095* (2006.01)
*C09B 33/02* (2006.01) *C09B 47/16* (2006.01)
*C09B 47/26* (2006.01) *B01J 19/00* (2006.01)

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **30.09.2008 JP 2008253718**

(71) Applicant: **FUJIFILM Corporation**
**Minato-ku**
**Tokyo 106-8620 (JP)**

(72) Inventors:
- **Sato, Tadahisa**
**Odawara-shi**
**Kanagawa 250-0001 (JP)**
- **Nagai, Youichi**
**Odawara-shi**
**Kanagawa 250-0001 (JP)**

(74) Representative: **HOFFMANN EITLE**
**Patent- und Rechtsanwälte**
**Arabellastrasse 4**
**81925 München (DE)**

(54) **Method of producing organic pigment fine-particles, organic pigment fine-particles obtained thereby, liquid dispersion thereof, and composition thereof**

(57) A method of producing organic pigment fine-particles, which comprises:
providing an organic pigment precursor soluble in a solvent, and a compound having an azole ring; and converting the organic pigment precursor to an organic pigment fine-particle in the presence of the compound having an azole ring.

***Fig. 1***

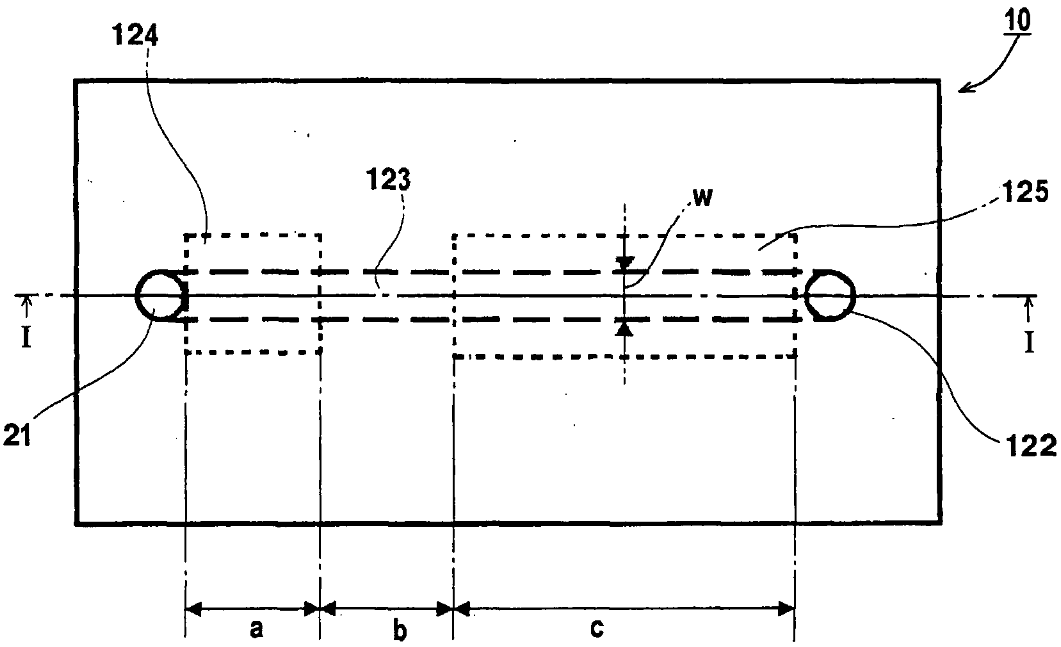




Printed by Jouve, 75001 PARIS (FR)

## Description

FIELD OF THE INVENTION

The present invention relates to a method of producing organic pigment fine-particles, organic pigment fine-particles obtained thereby, a liquid dispersion of the same, and a composition of the same. More particularly, the present invention relates to a method of producing organic pigment fine-particles characterized by converting an organic pigment precursor to an organic pigment fine-particle in the presence of a compound having an azole ring in the molecule, organic pigment fine-particles obtained by the method, the liquid dispersion of the organic pigment fine-particles, and the composition of the organic pigment fine-particles.

BACKGROUND OF THE INVENTION

Full-fledged research activities in the field of inkjet printing toward practical applications started in the 1960s. The 1980s and 1990s saw the rapid development of inkjet printing, which is considered to be a printing technology highly economical, as the development of digital information technology, for example, personal computers and networks evolved. Then, by virtue of advances in image quality enhancement driven by improved dye and pigment color materials for ink for forming images and improved ink mixing, ink ejection, penetration into recording medium, and drying technologies for the dyes and pigments, inkjet printers whose image quality and durability are close or superior to those of silver halide photography have been recently developed.

Under those situation, the composition, dispersion medium, viscosity, surface tension, specific gravity, and other physical properties required of ink for inkjet need to be finely controlled, according to ink ejection methods (e.g. a piezoelectric ejection method, a bubble jet (registered trade mark) method) and nozzle features of the above inkjet printers. Especially in current high quality printers, inadequate matching between the printers and inks may cause abnormal printing. Ordinary inkjet printers for computer outputs generally use aqueous dye inks containing water soluble dyes dissolved in an aqueous solvent. Printing with aqueous dye inks, however, involves problems of low resistance of the resultant image to light, oxidation, and water. As a viable solution to these problems, the use of carbon black and organic pigments came under consideration, and aqueous pigment inks of pigment fine-particles dispersed in water have been used. Images printed with aqueous pigment inks have significant advantages over images printed with dye inks, in terms of fastness to light and resistance to water.

Although aqueous inks work advantageously on paper, which is a liquid-absorbing recording medium, they cannot be used for printing on other media, such as plastic, metal, and ceramics. To address this issue, there have been developed solvent inks (oil inks) whose bases are organic solvents as those used for general printing, solid (or phase-change) inks that are solid at ordinary temperature but ejected in the heated and melted state, and ultraviolet (UV)-curable inks (including inks capable of curing by UV, electron beam, radiation, and other electromagnetic wave irradiation) that are cured by UV, electron-beam, and other electromagnetic wave irradiation once the ejected inks reach the surface of media.

The UV-curable inks for inkjet contain pigments as color materials (colorants). The pigments to be used as the colorants must be stably and uniformly dispersed in an organic solvent, which organic solvent is a photopolymerizable monomer or oligomer to be used in the inkjet inks. The liquid dispersions of the pigments are usually prepared by breakdown methods. A usual operation of the breakdown methods is, for example, to disperse a pigment and a mixture of a dispersing agent and a monomer in a bead mill at low temperature. According to those methods, however, it is not easy to reduce the size of pigment particles down to 100 nm or less, and it is difficult to ensure a size of 50 nm or less with good uniformity, which is generally considered to be preferable for image formation. Still less, it is not practical to realize those methods in industrial scales.

Further, color filters for use in charge-coupled device (CCD) sensors of digital cameras and in liquid crystal displays (LCDs) employ organic pigment fine-particles dispersible in an organic solvent. These applications have given rise to a need for thinner color filters in pursuit of higher image quality, and the thickness of color filter largely depends on the particle diameter of an organic pigment to be used. Therefore, there is a demand for the development of a method of mass-producing pigment particles, for example, of 50-nm or smaller, which are stably dispersed in an organic solvent.

As a method of responding to the above demand, a method of converting organic pigment soluble form (precursor) to an organic pigment in a flow process, by introducing an organic solvent solution of the organic pigment soluble form into a flow reactor is proposed recently (see JP-A-2007-284665 ("JP-A" means unexamined published Japanese patent application)). Specifically, it is a method of thermally decomposing in the presence of a dispersing agent, using a microreactor as the flow reactor, being a method of producing a liquid dispersion of pigments fine-particles of nanometer size. Although this method is promising for producing minute pigments fine-particles, since the channel of the flow reactor is narrow, it is unfortunate that the generating pigments fine-particles easily block the channel and the improvement has been demanded.

Further, controlling the crystallinity and the crystal phase of pigments has been tried. For example, a synthetic example of the pigments using the compound prepared by bonding an alkyl group to a nitrogen atom of a specified hetero ring, as a grain growth inhibitor, is disclosed (see JP-A-2000-7677). By regulating the crystal form of the pigments generated by this method into the predetermined form, it is possible to change the hue of the resultant image, however, the effect of controlling the particle diameter is not clear.

SUMMARY OF THE INVENTION

The inventors of the present invention achieved and proposed the new technology of JP-A-2007-284665 as a method of producing, in a large mass and uniformly, the pigment fine-particles being stable in the organic solvent. By propelling further research and development, the inventors have paid our attention to further more enhancement of dispersion stability of the fine-particles in the liquid dispersion, and an improvement against the block of a channel in continuous production using the flow reactor with a narrow channel as occasion demand. In view of the above-described situation, an object of the present invention is to provide an effective method of continuously producing organic pigment fine-particles, with an extremely small particle diameter, with a sharp particle diameter distribution peak, with high monodispersity and high solvent dispersion stability, and being capable of maintaining favorable dispersion stability when having diluted again even after condensed, suppressing block of the channel of the flow reactor as occasion demands. Another object of the present invention is to provide organic pigment fine-particles obtained by the method, the liquid dispersion of the organic pigment fine-particles, and the composition of the organic pigment fine-particles.

According to the present invention, there is provided the following means:

(1) A method of producing organic pigment fine-particles, which comprises:

providing an organic pigment precursor soluble in a solvent and a compound having an azole ring; and converting the organic pigment precursor to an organic pigment fine-particle in the presence of the compound having an azole ring.

(2) The method of producing organic pigment fine-particles according to the above item (1), wherein the compound having an azole ring is represented by formula (I):

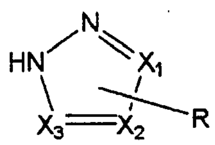

**Formula** ( I )

wherein $X_1$, $X_2$ and $X_3$ each independently represents a carbon atom or a nitrogen atom, and at least one of them represents a carbon atom; and R represents a substituent having 6 or more carbon atoms, and R bonds to any one of $X_1$, $X_2$ or $X_3$ of being a carbon atom.

(3) The method of producing organic pigment fine-particles according to the above item (1) or (2), wherein two or more of $X_1$, $X_2$ and $X_3$ in formula (I) each represents a carbon atom.

(4) The method of producing organic pigment fine-particles according to any one of the above items (1) to (3), wherein the molecular weight of the compound having an azole ring is within the range from 100 to 1,000.

(5) The method of producing organic pigment fine-particles according to any one of the above items (1) to (4), wherein the organic pigment precursor is a compound convertible to the organic pigment through a thermal reaction.

(6) The method of producing organic pigment fine-particles according to any one of the above items (1) to (5), wherein the organic pigment precursor is represented by formula (II):

A[-C(=O)-O-Ra]x    Formula (II)

wherein A represents a group to give an organic pigment, Ra represents an aliphatic group, and x represents an integer of 1 to 8.

(7) The method of producing organic pigment fine-particles according to any one of the above items (1) to (6), wherein a solution of the organic pigment precursor is introduced into a channel of a flow reactor and the organic pigment precursor is converted to the organic pigment by a heating reaction in the flow process when the organic pigment precursor is converted to the organic pigment.

(8) The method of producing organic pigment fine-particles according to the above item (7), wherein the organic

pigment precursor is converted to the organic pigment while flowing under the condition of being heating to 150°C or higher.

(9) The method of producing organic pigment fine-particles according to the above item (7) or (8), wherein the flow reactor has a channel of an equivalent diameter of 1 mm or less.

(10) The method of producing organic pigment fine-particles according to the above item (9), wherein the reactor having the channel of an equivalent diameter of 1 mm or less is a microreactor.

(11) The method of producing organic pigment fine-particles according to any one of the above items (1) to (10), wherein the organic pigment fine-particles are produced as a liquid dispersion thereof.

(12) Organic pigment fine-particles produced by the method according to any one of the above items (1) to (11).

(13) A liquid dispersion of organic pigment fine-particles produced via the method according to any one of the above items (1) to (11).

(14) A composition of organic pigment fine-particles, **characterized in that** the composition contains:

fine particles of an organic pigment; and
a compound having an azole ring as represented by formula (I):

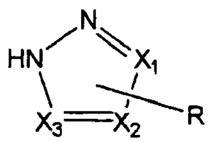

**Formula** (I)

wherein $X_1$, $X_2$ and $X_3$ each independently represents a carbon atom or a nitrogen atom, and at least one of them represents a carbon atom; and R represents a substituent having 6 or more carbon atoms, and R bonds to any one of $X_1$, $X_2$ or $X_3$ of being a carbon atom.

(15) The composition of organic pigment fine-particles according to the above item (14), wherein the organic pigment is at least one selected from the group consisting of a diketo pyrrolic compound, a quinacridone compound, and an azo compound.

According to the production method of the present invention, it is possible to efficiently produce the organic pigment fine-particles with small particle diameters and exhibiting stable solvent dispersibility, especially favorable dispersion stability to the organic solvent, while raising continuous productivity. Further, the production method of the present invention achieves such excellent advantageous effects as, when the flow reactor is used, enabling to produce the organic pigment fine-particles by precisely controlling the reaction time and the reaction temperature in converting the organic pigment precursor to the organic pigment by thermal decomposition reaction and the like in the channel.

Other and further objects, features and advantages of the invention will appear more fully from the following description, appropriately referring to the accompanying drawings.

## BRIEF DESCRIPTION OF THE DRAWINGS

Fig. 1 is a schematic plane view showing a preferable embodiment of a flow reactor that can be used in the producing method of the present invention.

Fig. 2 is a sectional view showing the cross-section along the line I-I of the flow reactor of Fig. 1.

Fig. 3 is a schematic explanatory view showing another preferable embodiment of a flow reactor that can be used in the producing method of the present invention.

Fig. 4 is a schematic explanatory view showing still another preferable embodiment of a flow reactor that can be used in the producing method of the present invention.

Fig. 5-1 is an exploded perspective view schematically showing further another preferable embodiment of a flow reactor that can be used in the producing method of the present invention.

Fig. 5-2 is an exploded perspective view (continuing to Fig. 5-1) schematically showing the above-mentioned further another preferable embodiment of the flow reactor that can be used in the producing method of the present invention.

Fig. 6 is a sectional view showing the cross-section along the line II-II of the devices shown in Figs. 5-1 and 5-2, as shown in the state of being assembled.

DETAILED DESCRIPTION OF THE INVENTION

The present invention will be described in detail below.

The organic pigment precursor to be used in the present invention is a compound capable of dissolving into a solvent (preferably an organic solvent) and, at the same time, capable of being converted to the organic pigment by applying energy, such as heat.
The solubility of the organic pigment precursor to the solvent is not particularly limited and depends on the kind of the solvent; and the solubility is preferably, for example, within the range from 0.5 to 50 % by mass, more preferably from 1 to 20 % by mass. Herein, the solubility may be either the solubility at an arbitrary temperature in consideration of reacting temperature, or the solubility in an occasion of adding a dissolving accelerator, such as an acid or an alkali. Examples of the organic pigment precursor include a compound into which a protecting group for enhancing solvent solubility to a mother skeleton constituting the pigment is introduced. Regarding the thus-introduced protecting group, it is easily eliminated by chemical treatment, photolysis treatment, heat treatment, or the like, and as a result, the mother skeleton appears and changes into the pigment, followed by coloring an original color of the pigment. Such the organic pigment precursor is also called as a latent pigment, and Nature Vol. 388, page 131 (1997) describes about it. Further, for example, JP-A-9-3362, PCT International Publication Nos. WO98/32802, WO98/45757, WO98/58027, and WO99/01511, JP-A-11-92695, and JP-A-11-310726 disclose pigments precursors having various colors and structures.

Preferred organic pigment precursor to be used for the present invention is represented by the following formula (II):

A[-C(=O)-O-Ra]x    Formula (II)

wherein A represents a group to give an organic pigment, Ra represents an aliphatic group, and x represents an integer of 1 to 8.
A and Ra in the formula will be described in detail below.

First, Ra will be described. Ra represents an aliphatic group, preferably represents an aliphatic group having 1 to 24 carbon atoms. Examples of the aliphatic group include a substituted or unsubstituted alkyl group, alkenyl group, alkynyl group, cycloalkyl group or cycloalkenyl group. Further preferable detailed examples of Ra include alkyl groups such as methyl, ethyl, isopropyl, t- butyl or t- amyl; alkenyl groups such as allyl, 1-butene-3-yl or 3-methyl-1-butene-3-yl; alkynyl groups such as propargyl, 1-butyne-3-yl or 3-methyl-1-butyne-3-yl; cycloalkyl group such as cyclopentyl, cyclohexyl or 1-methyl-1-cyclohexyl; cycloalkenyl group such as 1-cycloalkene-3-yl or 3-methyl-1-cyclohexen-3-yl. Examples of the substituent which may be possessed by these groups include a halogen atom (a fluorine atom, a chlorine atom or a bromine atom), an alkyl group (a methyl group, an ethyl group, an isopropyl group or a t-butyl group, etc.), an aryl group (a phenyl group, 1- or 2-naphthyl group, etc.), an alkoxy group (a methoxy group, an ethoxy group or an isopropoxy group, etc.), an aryloxy group (a phenoxy group or a naphthoxy group, etc.), an arylamino group (an anilino group or a diphenylamino group, etc.), an alkylamino group (a methylamino group or a dimethylamino group, etc.), a cyano group, and a nitro group. Any of these substituents may be further substituted with the above-mentioned substituent.

Especially preferred examples of Ra include a substituted or unsubstituted alkyl group, alkenyl group or alkynyl group, and its preferred substituent is an alkyl group or an alkynyl group.

x represents an integer of 1 to 8, preferably an integer of 1 to 4.

Next, a description will be made about A. A represents a group to give the organic pigment, and specific examples thereof include the group to give a diketopyrrolopyrrole compound pigment, a quinacridone compound pigment, a quinacridonequinone compound pigment, an anthraquinone compound pigment, an anthanthrone compound pigment, a perylene compound pigment, a perynone compound pigment, an indigo compound pigment, a thioindigo compound pigment, a benzimidazolone compound pigment, a quinophthalone compound pigment, an indanthrone compound pigment, an isoindolinone compound pigment, an isoindoline compound pigment, a dioxazine compound pigment, a triaryl carbonium compound pigment, an aminoanthraquinone compound pigment, a pyranthrone compound pigment, an isoviolanthrone compound pigment, a phthalocyanine compound pigment, a disazo condensed compound pigment, a disazo compound pigment, or an azo compound pigment.

Preferable examples of the group A to give an organic pigment include groups to give diketopyrrolopyrrole compound pigments, quinacridone compound pigments, anthraquinone compound pigments, perylene compound pigments, indigo compound pigments, quinophthalone compound pigments, indanthrone compound pigments, isoindolinone compound pigments, isoindoline compound pigments, dioxazine compound pigments, phthalocyanine compound pigments, and azo-series organic pigments (disazo condensed compound pigments, disazo compound pigments, or azo compound pigments).

When A is a group to give the diketopyrrolopyrrole compound pigment, the organic pigment precursor represented by formula (II) is preferably the compound represented by formula (II-1).

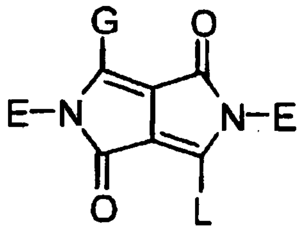

Formula (II-1)

In the formula, E represents a hydrogen atom, or a protecting group having a leaving (or eliminating) property, and at least one E represents a -C(=O)-O-R group. Herein, when there is only one E in the formulae (II-2) to (II-26) which will be described below, that E represents a -C(=O)-O-R group; and when there are 2 or more E's, at least one of the E's represents a -C(=O)-O-R group. G and L each independently represent any one group represented by any one of the following formulae (i) to (viii). In this case, G and L may be the same with or different from each other.

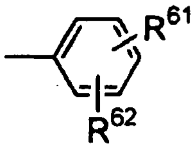

(i)

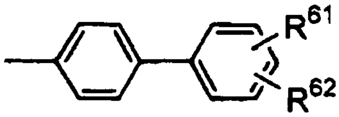

(ii)

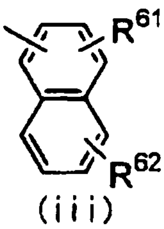

(iii)

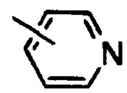

(iv)

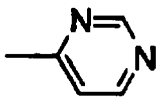

(v)

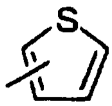

(vi)

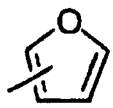

(vii)

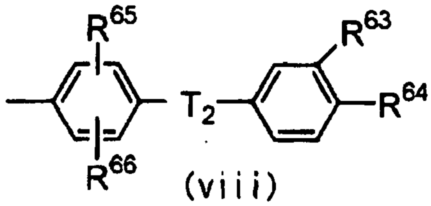

(viii)

In formulae (i) to (viii), $R^{61}$ and $R^{62}$ each independently represent a hydrogen atom, a halogen atom, an alkyl group having 1 to 24 carbon atoms, an alkoxyl group having 1 to 6 carbon atoms, an alkyl mercapto group having 1 to 18 carbon atoms, an alkylamino group having 1 to 18 carbon atoms, a cyano group, a nitro group, a phenyl group, a trifluoromethyl group, a cycloalkyl group having 5 or 6 carbon atoms, -CH=NR (R represents an alkyl group having 1 to 24 carbon atoms), an imidazolyl group, a pyrazolyl group, a triazolyl group, a piperazinyl group, a pyrrolyl group, an oxazolyl group, a benzoxazolyl group, a benzthiazolyl group, a benzimidazolyl group, a morpholinyl group, a piperidinyl group, or a pyrrolidinyl group; and $T_2$ represents $-CH_2-$, $-CH(CH_3)-$, $-C(CH_3)_2-$, -CH=N-, -N=N-, -O-, -S-, -SO-, $-SO_2-$, or $-NR^{67}-$. $R^{63}$ and $R^{64}$ each independently represent a hydrogen atom, a halogen atom, an alkyl group having 1 to 6 carbon atoms, an alkoxyl group having 1 to 6 carbon atoms, or a cyano group. $R^{65}$ and $R^{66}$ each independently represent a hydrogen atom, a halogen atom, or an alkyl group having 1 to 6 carbon atoms. $R^{67}$ represents a hydrogen atom or an alkyl group having 1 to 6 carbon atoms.

When A is a group to give the quinacridone compound pigment, the organic pigment precursor represented by formula (II) is preferably the compound represented by the following formula (II-2).

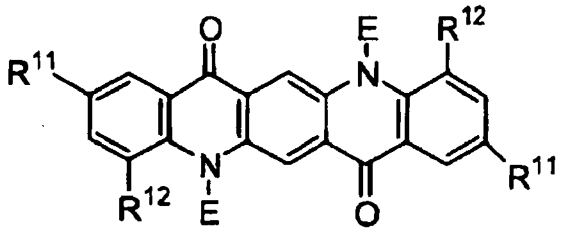

Formula (II-2)

In formula (II-2), $R^{11}$ and $R^{12}$ each independently represent a hydrogen atom, a halogen atom, an alkyl group having 1 to 18 carbon atoms, an alkoxyl group having 1 to 4 carbon atoms, or a phenyl group; preferably a hydrogen atom, a chlorine atom, or a methyl group. In formula (II-2), E has the same meaning as that in formula (I-1).

When A is a group to give the anthraquinone compound pigment, the organic pigment precursor represented by formula (II) is preferably the compound represented by formula (II-3), (II-4) or (II-5).

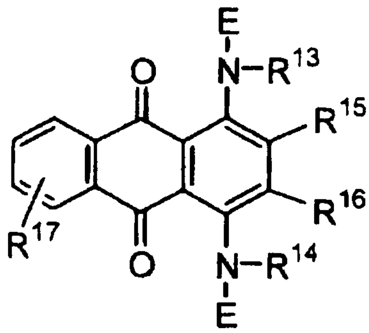

Formula (II-3)

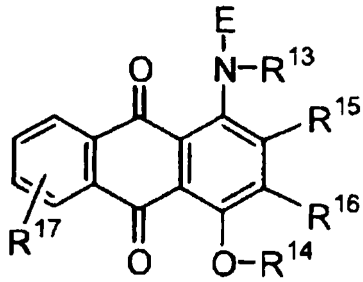

Formula (II-4)

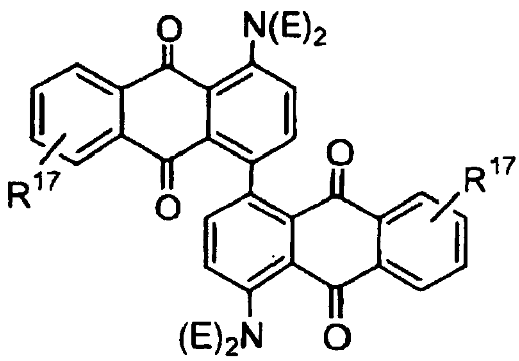

Formula (II-5)

In formulae (II-3) to (II-5), $R^{13}$ and $R^{14}$ each independently represent a hydrogen atom, an alkyl group having 1 to 12 carbon atoms, or an aryl group having 6 to 12 carbon atoms. This aryl group may be substituted with a halogen atom, an alkyl group having 1 to 6 carbon atoms, an alkoxyl group having 1 to 6 carbon atoms, a nitro group, an acetyl group; an alkyl group having 1 to 6 carbon atoms and having a $-SO_2NH-$ group; or $-SO_2NH_2$. $R^{15}$ and $R^{16}$ each independently represent a hydrogen atom, a halogen atom, an alkyl group having 1 to 6 carbon atoms, an alkoxyl group having 1 to 6 carbon atoms, a nitro group, a cyano group, $-CONH_2$; an alkyl group having 1 to 6 carbon atoms and having a $-SO_2NH-$ group; $-SO_2NH_2$, $-SO_3H$, $-SO_3Na$, or an aryl group having 6 to 12 carbon atoms. This aryl group may be substituted with a halogen atom, an alkyl group having 1 to 6 carbon atoms, an alkoxyl group having 1 to 6 carbon atoms, a nitro group, an acetyl group; an alkyl group having 1 to 6 carbon atoms and having a $-SO_2NH-$ group; or

$-SO_2NH_2$. $R^{17}$ represents a hydrogen atom, a halogen atom, a nitro group, a cyano group, a hydroxy group, or an alkoxyl group having 1 to 6 carbon atoms. In formulae (II-3) to (II-5), E has the same meaning as that in formula (II-1).

When A is a group to give the perylene compound pigment, the organic pigment precursor represented by formula (II) is preferably the compound represented by formula (II-6) or (II-7).

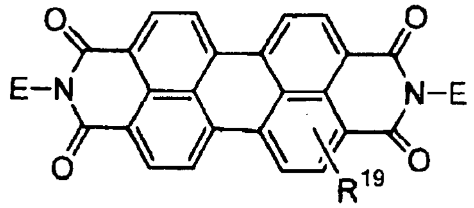

Formula (II-6)

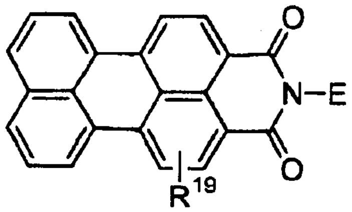

Formula (II-7)

In formulae (II-6) to (II-7), $R^{19}$ represents a hydrogen atom, an alkyl group having 1 to 6 carbon atoms, an unsubstituted phenyl group, a phenyl group substituted with a halogen atom or an alkyl group having 1 to 4 carbon atoms, a benzyl group, or a phenethyl group. In formulae (II-6) to (II-7), E has the same meaning as that in formula (II-1).

When A is a group to give the indigo compound pigment, the organic pigment precursor represented by formula (II) is preferably the compound represented by formula (II-8).

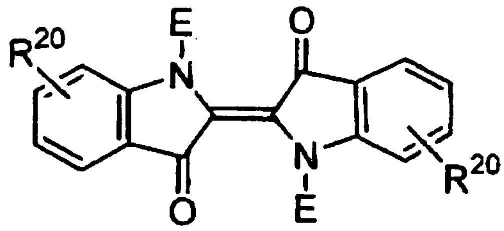

Formula (II-8)

In formula (II-8), $R^{20}$ represents a hydrogen atom, a cyano group, an alkyl group having 1 to 6 carbon atoms, an alkoxyl group having 1 to 6 carbon atoms, or a halogen atom. In formula (II-8), E has the same meaning as that in formula (II-1).

When A is a group to give the quinophthalone compound pigment, the organic pigment precursor represented by formula (II) is preferably the compound represented by formula (II-9).

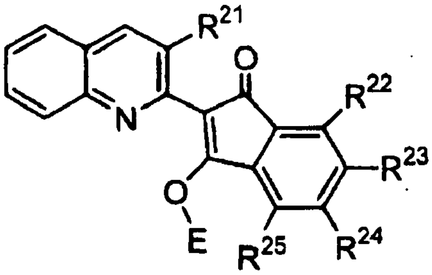

Formula (II-9)

In formula (II-9), $R^{21}$ represents a hydrogen atom or O-E. $R^{22}$ to $R^{25}$ each independently represent a hydrogen

atom, a halogen atom, an alkyl group having 1 to 6 carbon atoms and having a -COO- group, or an alkyl group having 1 to 6 carbon atoms and having a -CONH- group. In formula (II-9), E has the same meaning as that in formula (II-1).

When A is a group to give the indanthrone compound pigment, the organic pigment precursor represented by formula (II) is preferably the compound represented by formula (II-10).

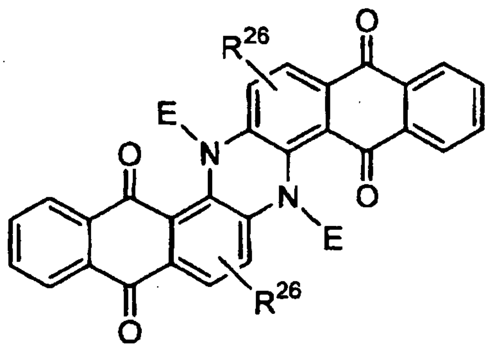

Formula (II-10)

In formula (II-10), $R^{26}$ represents a hydrogen atom, or a halogen atom. In formula (II-10), E has the same meaning as that in formula (II-1).

When A is a group to give the isoindolinone compound pigment, the organic pigment precursor represented by formula (II) is preferably the compound represented by formula (II-11) or (II-12).

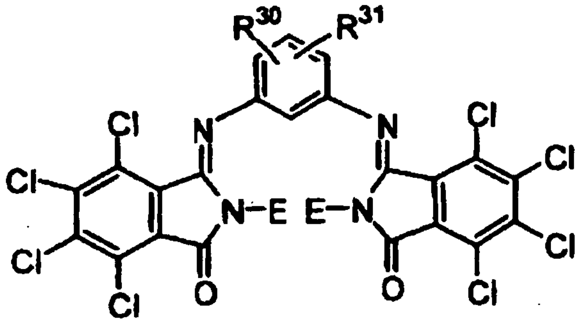

Formula (II-11)

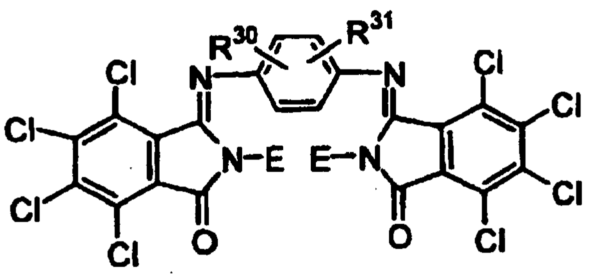

Formula (II-12)

In formulae (II-11) to (II-12), $R^{30}$ and $R^{31}$ each independently represent a hydrogen atom, a halogen atom, or an alkyl group having 1 to 4 carbon atoms. In formulae (II-11) to (II-12), E has the same meaning as that in formula (II-1).

When A is a group to give the isoindoline compound pigment, the organic pigment precursor represented by formula (II) is preferably the compound represented by formula (II-13), (II-14) or (II-15).

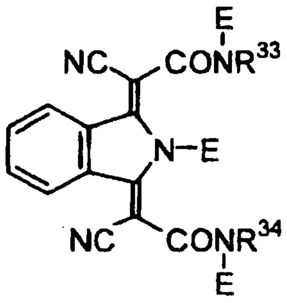

Formula ( II − 13 )

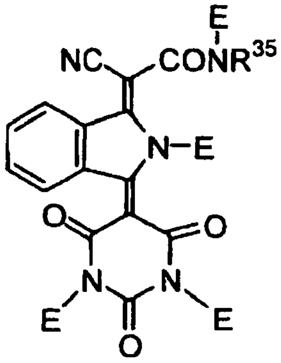

Formula( II − 14 )

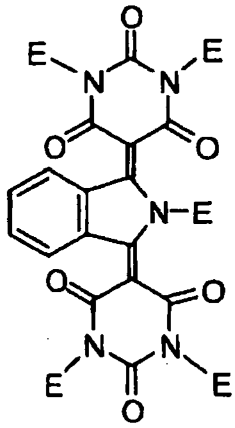

Formula( II − 15 )

In formulae (II-13) to (II-15), $R^{33}$ represents a group represented by formula ($B_1$). $R^{34}$ represents a hydrogen atom, an alkyl group having 1 to 24 carbon atoms, a benzyl group, or a group represented by formula ($B_2$). $R^{35}$ represents a hydrogen atom, E, or $R^{33}$. $R^{36}$, $R^{37}$, $R^{38}$ and $R^{39}$ each independently represent a hydrogen atom, an alkyl group having 1 to 24 carbon atoms, an alkoxyl group having 1 to 6 carbon atoms, a halogen atom, or a trifluoromethyl group. In formulae (II-13) to (II-15), E has the same meaning as that in formula (II-1).

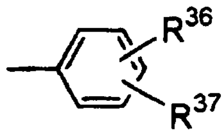

($B_1$)

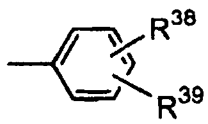

($B_2$)

When A is a group to give the dioxazine compound pigment, the organic pigment precursor represented by formula (II) is preferably the compound represented by formula (II-16) or (II-17).

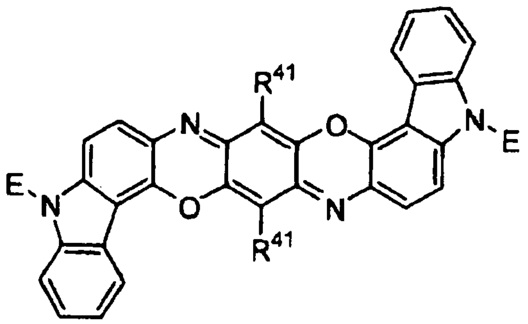

Formula ( II − 16 )

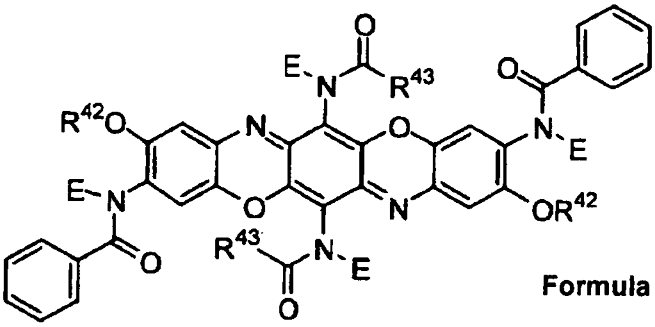

Formula ( I I — 17 )

In formulae (II-16) to (II-17), $R^{41}$ represents a hydrogen atom, a halogen atom, or an alkyl group having 1 to 24 carbon atoms. $R^{42}$ and $R^{43}$ each independently represent an alkyl group having 1 to 4 carbon atoms.
When A is a group to give the phthalocyanine compound pigment, the organic pigment precursor represented by formula (II) is preferably the compound represented by formula (II-18).

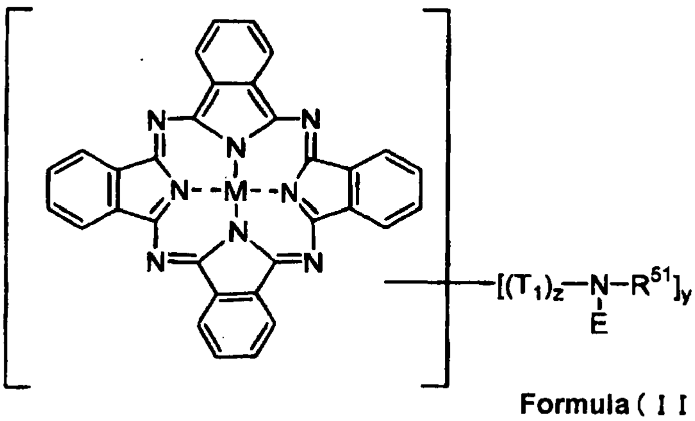

Formula ( I I — 18 )

In formula (II-18), M represents $H_2$, Cu(II), Zn(II), Fe(II), Ni(II), Ru(II), Rh(II), Pd(II), Pt(II), Mn(II), Mg(II), Be(II), Ca(II), Ba(II), Cd(II), Hg(II), Sn(II), Co(II), or Pb(II); preferably a divalent metal selected from the group consisting of Cu (II), Zn(II), Fe(II), Ni(II) and Pd(II), or a divalent metal oxide selected from the group consisting of V(O), Mn(O) and Ti (O). $T_1$ represents $-CHR^{52}-$, -CO-, or $-SO_3-$. $R^{51}$ represents a hydrogen atom, an alkyl group having 1 to 6 carbon atoms, $-N(E)R^{52}$, $-N(E)_2$, $-NHCOR^{53}$, $-COR^{53}$, or a group represented by formula ($B_3$). $R^{52}$ represents a hydrogen atom, or an alkyl group having 1 to 6 carbon atoms. $R^{53}$ represents an alkyl group having 1 to 6 carbon atoms. $R^{54}$ represents a hydrogen atom, a halogen atom, an alkyl group having 1 to 6 carbon atoms, or an alkoxyl group having 1 to 6 carbon atoms; z represents an integer of 0 or 1; and y represents an integer of 1 to 8. In formula (II-18), E has the same meaning as that in formula (II-1).

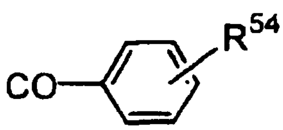

($B_3$)

When A is a group to give the azo-series compound pigment, the organic pigment precursor represented by formula (II) is preferably the compound represented by any of formulae (II-19) to (II-26).

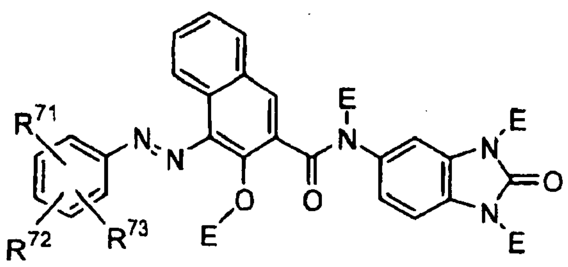

Formula ( I I − 19 )

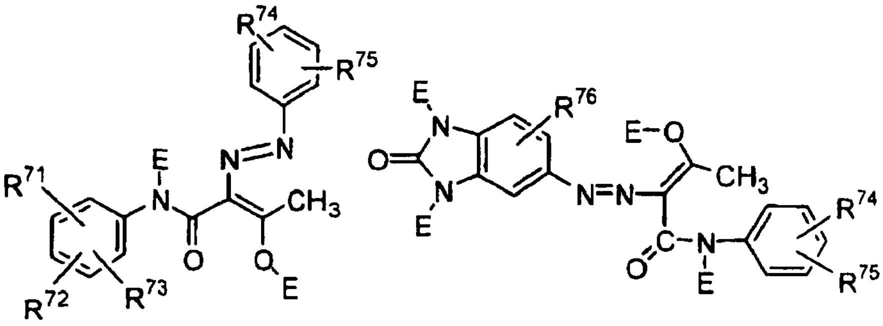

Formula ( I I − 2 0 )

Formula ( I I − 2 1 )

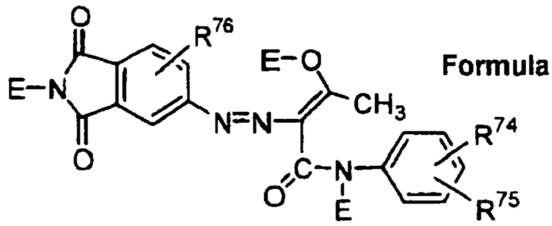

Formula ( I I − 2 2 )

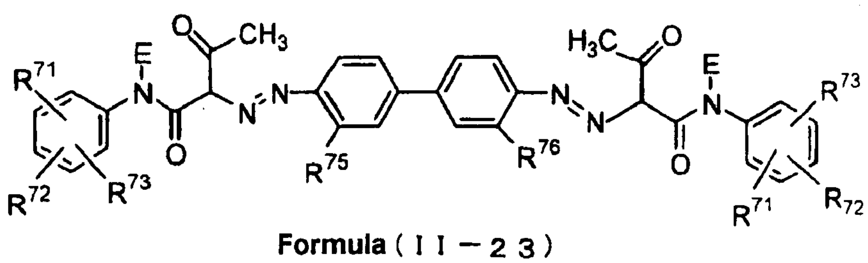

Formula ( I I − 2 3 )

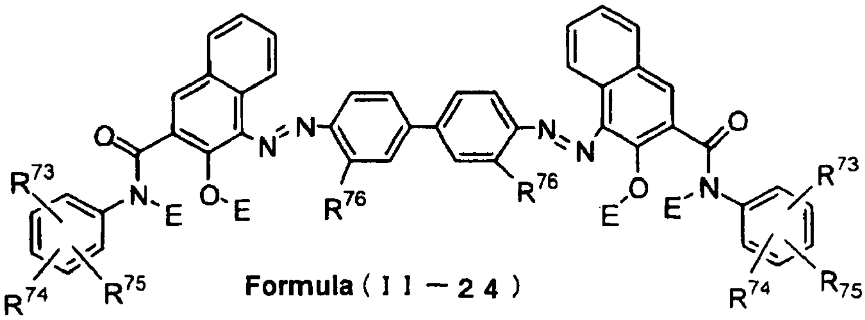

Formula (II-24)

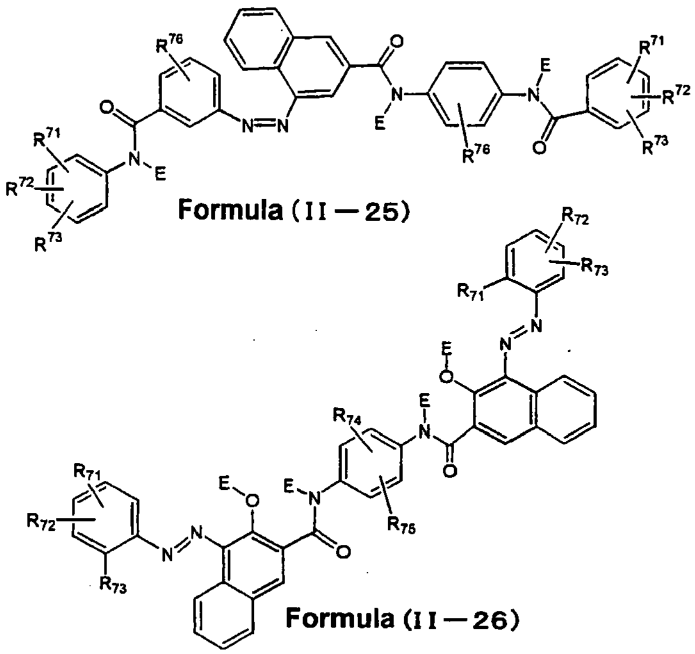

Formula (II-25)

Formula (II-26)

In formulae (II-19) to (II-26), $R^{71}$ to $R^{75}$ each independently represent a hydrogen atom, a halogen atom, an alkyl group having 1 to 6 carbon atoms, an alkoxyl group having 1 to 6 carbon atoms, a nitro group, an acetyl group, or an alkyl group having 1 to 6 carbon atoms and having a $SO_2NH$- group. $R^{76}$ represents a hydrogen atom, a halogen atom, an alkyl group having 1 to 6 carbon atoms, or an alkoxyl group having 1 to 6 carbon atoms.

As the compound represented by formula (II), among the compounds represented by any of formulae (II-1) to (II-26), the compounds represented by any of formulae II-1, II-2, II-6, II-10, II-15, II-16, II-18 and II-21 are preferable, and the compounds represented by any of formulae II -1, II-2, II-15 and II-16 are further preferable. Particularly preferable compound is the compound represented by formula (II-1).

Those latent pigments may be used singly, or, alternatively, two or more kinds of latent pigments may be used in combination.

Specific examples of the preferred organic pigment precursor to be used in the present invention will be illustrated below, but the present invention is not intended to be limited to those. Herein, Et represents an ethyl group, Bu represents a butyl group, and Ph represents a phenyl group, respectively, in the formulae.

(1)

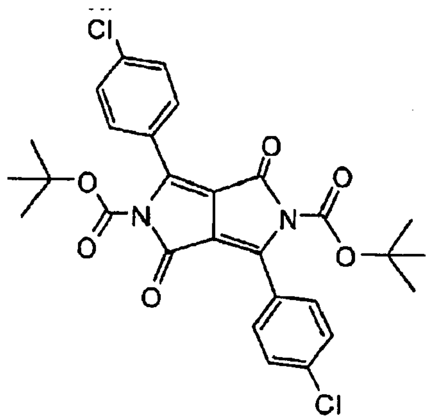

(2)

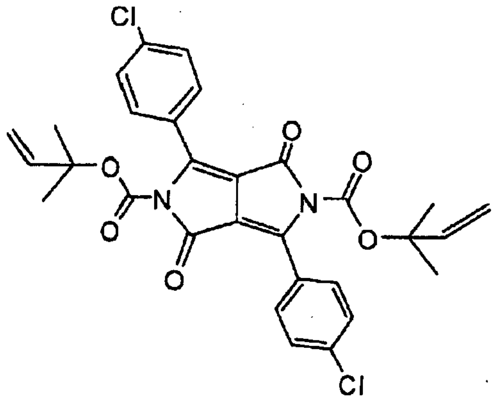

(3)

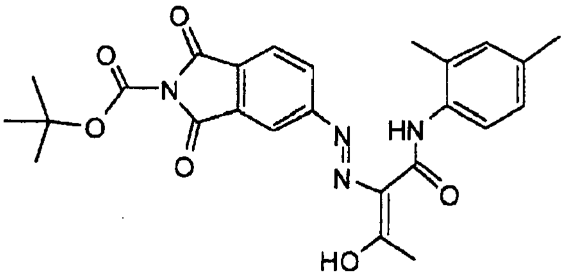

(4)

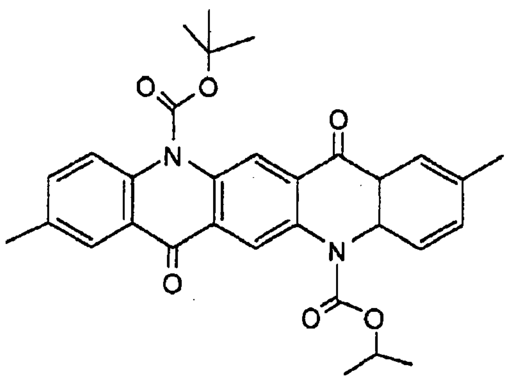

(5)

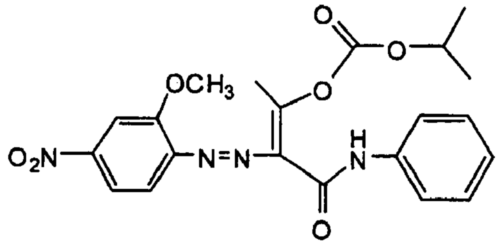

(6)

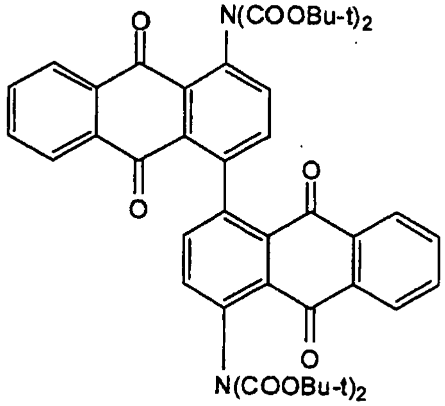

(7)

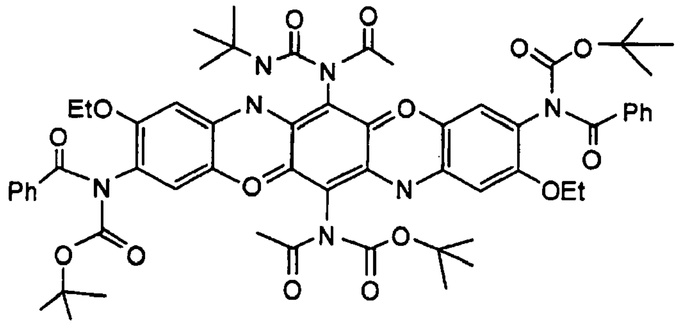

(8)

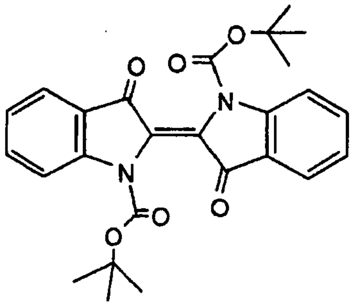

(9)

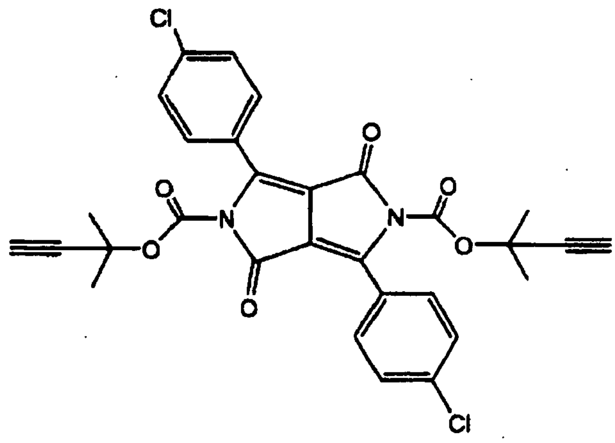

(10)

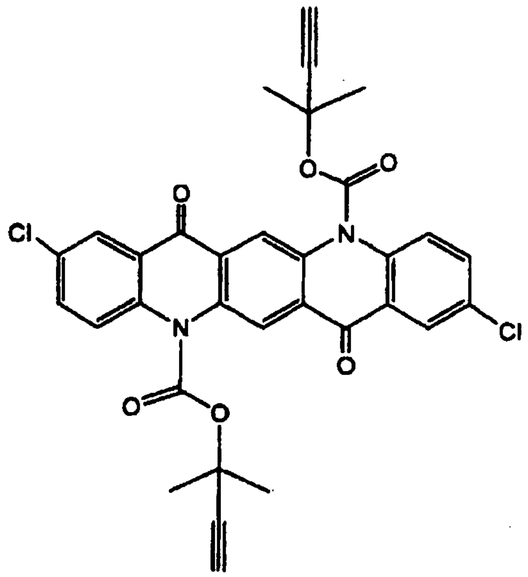

(11)

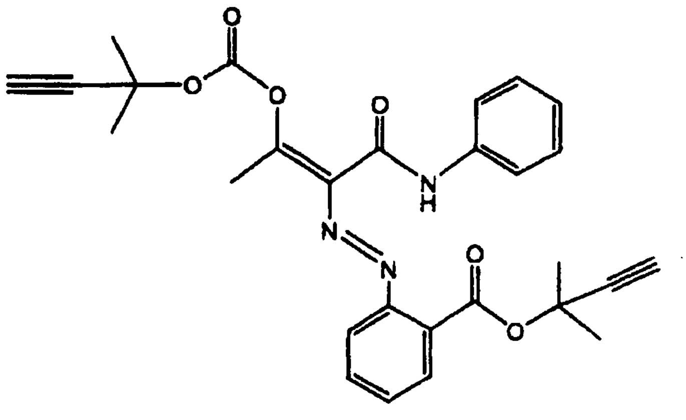

(12)

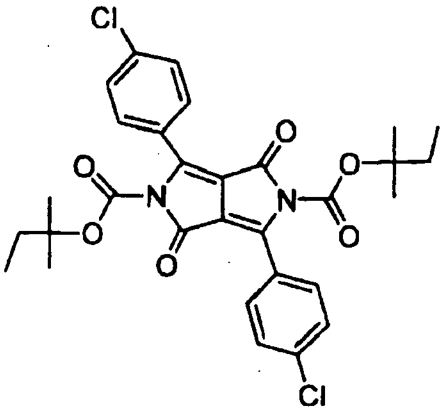

(13)

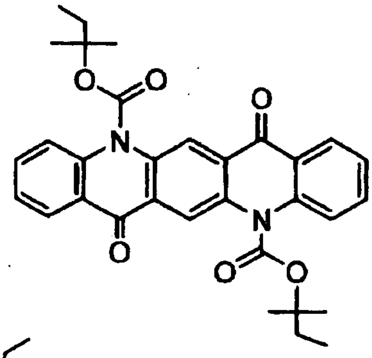

(14)

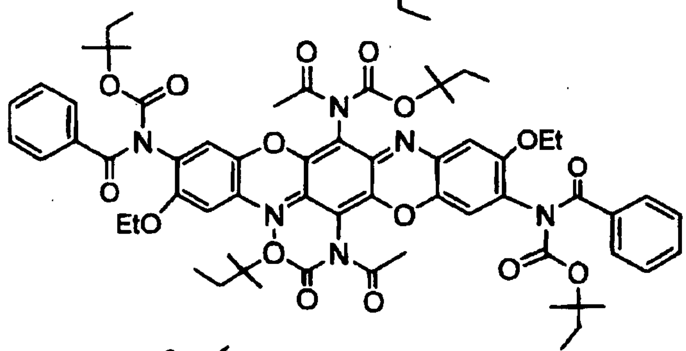

(15)

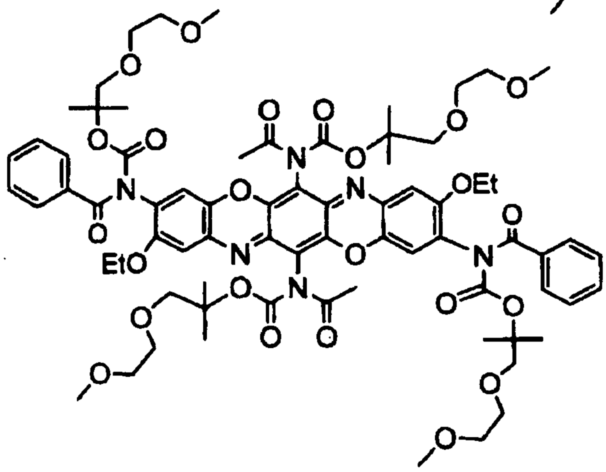

(16)

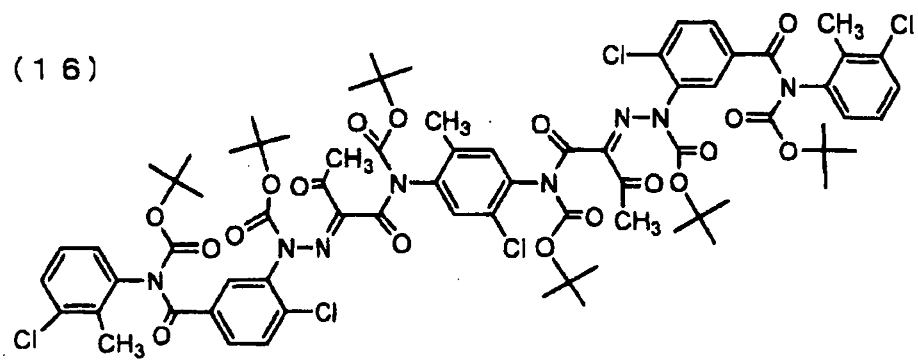

(17)

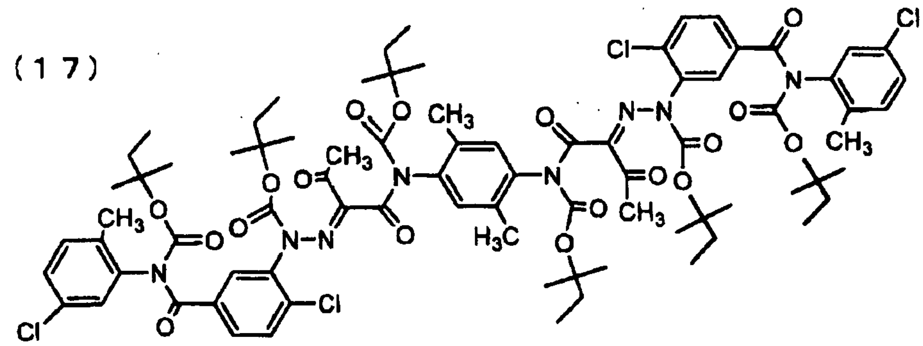

(18)

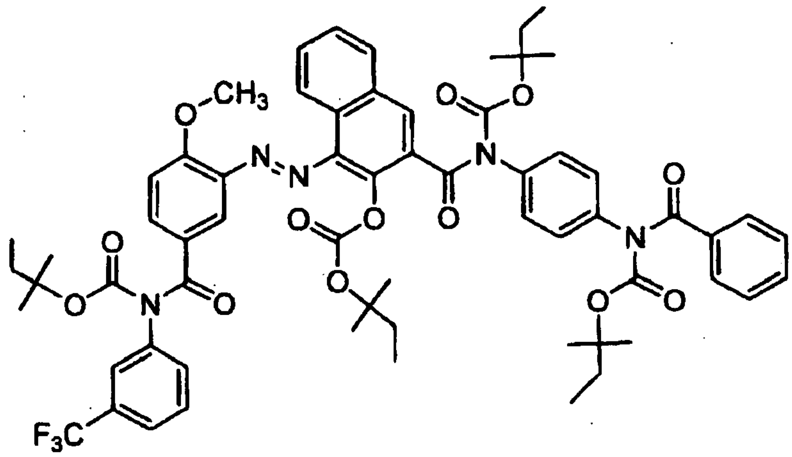

(19)

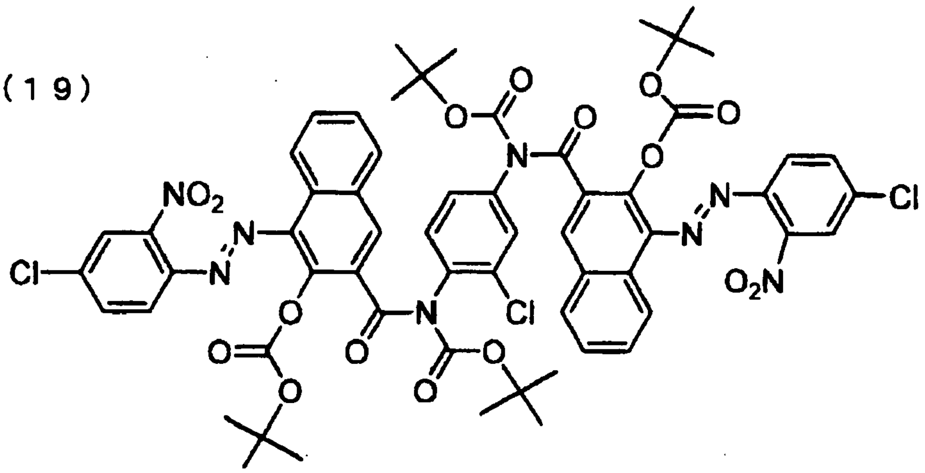

(20)

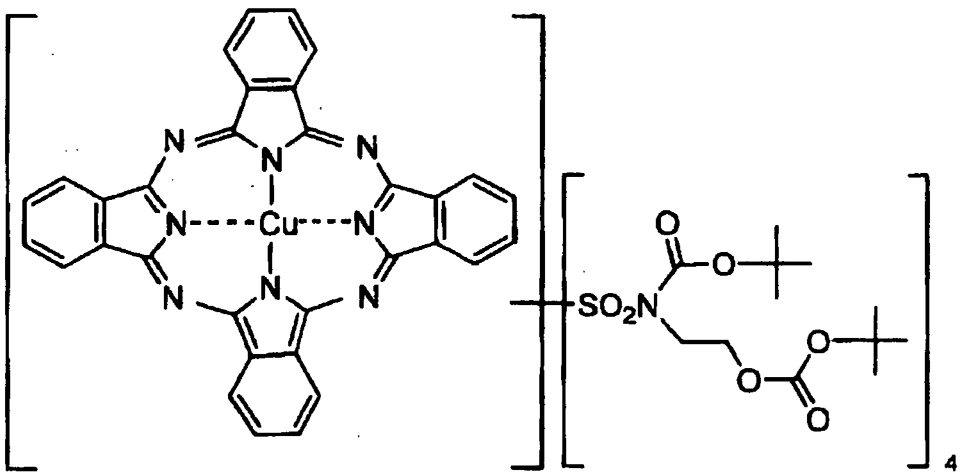

(21)

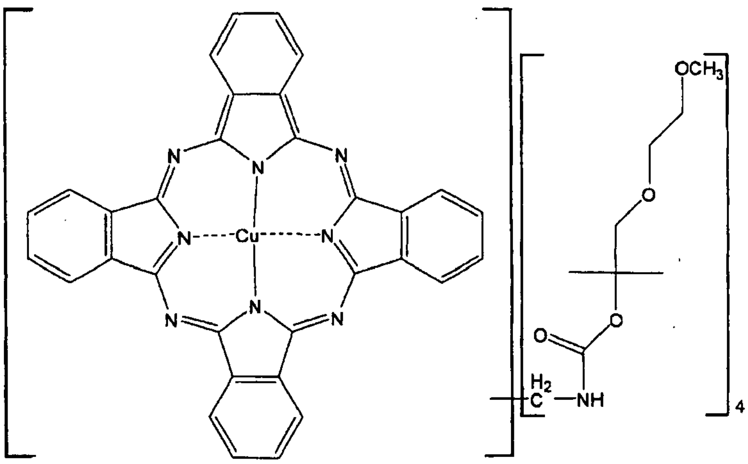

(22)

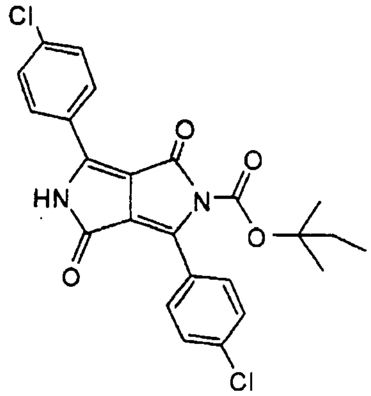

(23)

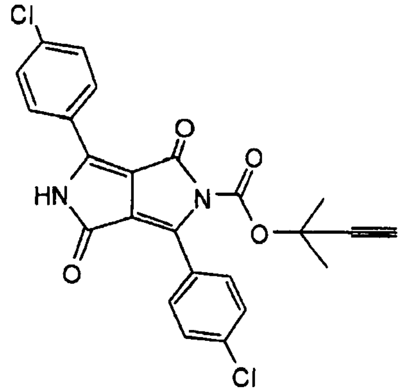

(24)

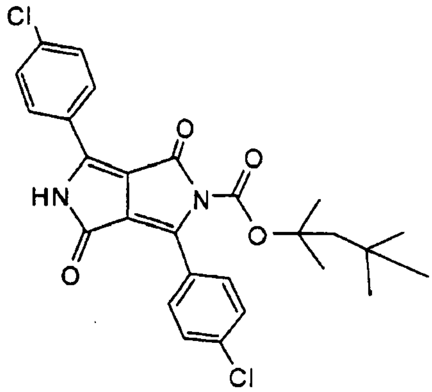

(25)

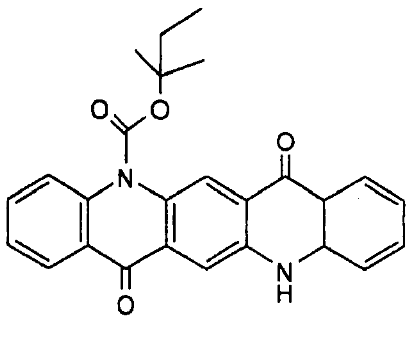

The above-exemplified compounds can be synthesized in a usual manner, for example, according to the methods described in JP-A-8-6242 or JP-A-2005-55495.

In the method of producing organic pigment fine-particles of the present invention, a compound having an azole ring in its molecule is allowed to coexist when the organic pigment precursor is converted to an organic pigment fine-particle. It is preferable that the compound is represented by formula (I).

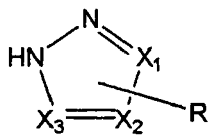

Formula ( I )

In formula (I), $X_1$, $X_2$ and $X_3$ each independently represents a carbon atom or a nitrogen atom, and at least one of them represents a carbon atom. R represents a substituent having 6 or more carbon atoms, which R bonds to any one of $X_1$, $X_2$ or $X_3$ that is a carbon atom.

When $X_1$, $X_2$ and $X_3$ each are a carbon atom, they may be substituted with a substituent, and the substituent is preferably an alkyl group, an aryl group, an alkoxy group, an acyl group, an acylamino group, or an alkoxycarbonyl group, each having 5 or less carbon atoms respectively, or a nitrile group. Further preferable substituent is an alkyl group (e.g. methyl, ethyl, isopropyl) or an acylamino group (e.g. acetylamino, propionyl amino, isobutynyl amino), each having 3 or less carbon atoms respectively.

It is preferable that two or more of $X_1$, $X_2$ and $X_3$ are carbon atoms, and when the carbon atoms are adjacent to each other, they may be one part of a condensed aromatic ring (condensed benzene or naphthalene ring). Also, each substituent may bond together to form a ring. Further, it is preferable that $X_1$ is a carbon atom, and that the substituent R substitutes $X_1$ of being the carbon atom.

Preferred examples of the azole ring include pyrazole ring, 1,2,4-triazole ring, and 1,2,3-triazole ring, and particularly preferred azole ring is pyrazole ring or 1,2,4-triazole ring.

R represents a substituent having 6 or more carbon atoms, which R bonds to any one of $X_1$, $X_2$ or $X_3$ of being a carbon atom. The substituent may bond, via a carbon atom, an oxygen atom or a nitrogen atom, with $X_1$, $X_2$ or $X_3$ of being a carbon atom. Preferred substituent is a substituted or unsubstituted, saturated or unsaturated alkyl group, aryl group, alkoxy group, aryloxy group, alkanoyl amino group, aryloyl aminoalkoxycarbonyl group, alkylcarbamoyl group or aryl carbamoyl group, each having 6 or more carbon atoms respectively. The substituent by which these groups are substituted is not particularly restricted, and it is suitable that R is a group satisfying to have 6 or more total carbon atoms, preferably the number of total carbon atoms within the range from 6 to 50, particularly preferably from 10 to 30.

Specific preferred examples of R include a saturated or unsaturated alkyl group, such as n-hexyl, cyclohexyl, decyl, dodecyl, hexadecyl, 2-hexyl octyl, 3,7-dimethyl octane-3-yl, octadecyl, 9-decene-1-yl, oleyl (cis-9-octadecene-1-yl), 2-oleoyloxyethyl, and 3-oleoyl aminopropyl; an aryl group, such as phenyl, 3,4,-dioctyloxyphenyl, 4-t-butylphenyl, 4-n-octyloxyphenyl, 4-(oleoyl amino) phenyl, and 1-naphthyl; an alkoxy group, such as n-hexyloxy, cyclohexyloxy, octyloxy, dodecyloxy, and oleiloxy; an aryloxy group, such as phenoxy, 4-t-butyl phenoxy, 2,4-di-t-amyl phenoxy, and 1-naphthoxy; an alkanoyl amino group, such as n-hexanoyl amino, cyclohexyl carbonylamino, oleoyl amino, and 2-(2,4-t-amyl phenoxy) butanoyl amino; an aryloyl amino group, such as benzoylamino, 4-t-butylbenzoylamino, 4-n-octadecyloxy benzoyl, and 1-naphthoyl; an alkoxycarbonyl group, such as n-hexyloxy carbonyl, n-dodecyloxycarbonyl, and oleil oxycarbonyl; an alkylcarbamoyl group, such as N-n-hexylcarbamoyl, N, N-di-n-hexylcarbamoyl, and N-[3-(2,4-di-t-amyl phenoxy)propyl carbamoyl; or an aryl carbamoyl group, such as N-phenylcarbamoyl, N-octyl-N-phenylcarbamoyl, and N,N-di(4-n-butylphenyl) carbamoyl.

R preferably represents a substituted or unsubstituted, saturated or unsaturated alkyl group, alkanoyl amino group or alkylcarbamoyl group, and particularly preferably a substituted alkyl group or alkanoyl amino group.

When the azole ring of the compound represented by formula (I) is a pyrazole ring, the preferred compound is represented by formula (III) or (IV).

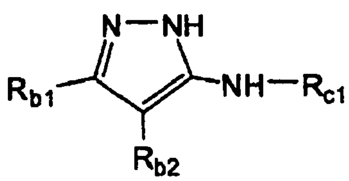

Formula (Ⅲ)

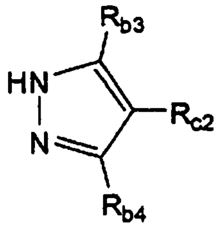

Formula(IV)

$R_{b1}$ to $R_{b4}$ in the formulae (III) and (IV) each independently represents a hydrogen atom, an alkyl group, and an aryl group, and preferably represents a hydrogen atom or an alkyl group, and particularly preferably represents the hydrogen atom. $R_{c1}$ represents an alkyl group, an aryl group or an acyl group, and preferably represents an acyl group having a double bond or having a phenol group as a substituent, and particularly preferably represents an acyl group having a phenol group as a substituent. $R_{c2}$ represents an alkyl group, an aryl group or an alkylcarbamoyl group; and preferably represents an alkyl group or an alkylcarbamoyl group, and particularly preferably represents an alkylcarbamoyl group.

When the azole ring of the compound represented by formula (I) is 1,2,4-triazole ring, the preferred compound is represented by formula (V).

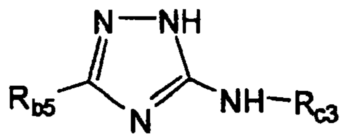

Formula(V)

In formula (V), $R_{b5}$ represents a hydrogen atom, an alkyl group or an aryl group, preferably a hydrogen atom or an alkyl group, and particularly preferably a hydrogen atom. $R_{c3}$ represents an alkyl group, an aryl group or an acyl group, and preferably represents an acyl group having a double bond or having a phenol group as a substituent, and particularly preferably represents an acyl group having a phenol group as a substituent.

When the azole ring of the compound represented by formula (I) is a 1,2,3-triazole ring, the preferred compound is represented by formula (VI).

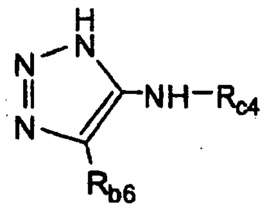

Formula(VI)

In formula (VI), $R_{b6}$ represents a hydrogen atom, an alkyl group or an aryl group, preferably a hydrogen atom or an alkyl group, and particularly preferably a hydrogen atom. $R_{c4}$ represents an alkyl group, an aryl group or an acyl group, preferably an alkyl group or an acyl group, and particularly preferably an alkyl group.

Synthesis of the compound represented by any of the above formulae, except the compound of formula (IV), can be carried out, by, firstly, synthesizing an amino azole ring compound which is a basic skeleton having $R_{b1}$ to $R_{b6}$ group, followed by modification of the amino group existing outside of the ring, to introduce $R_{c1}$ to $R_{c4}$ groups. Regarding a method for synthesizing the amino azole ring compound, the target compound can be synthesizable by adopting the method described in, for example, "Novel Lecture about Experimental Chemistry (Shin-Jikken Kagaku Koza)", Vol. 14 (IV) (1978, MARUZEN) pp. 2135 to 2293. In the case of synthesizing the compound represented by formula (IV), the target compound can be synthesizable, by allowing a corresponding 1,3-diketone and hydrazine to react each other to form a pyrazol skeleton, followed by modifying the substituent at 4-position.

The molecular weight of the compound represented by formula (I) is preferably within the range from 100 to 1,000, and particularly preferably from 300 to 1,000.

Herein, the molecular weight is in terms of mass average molecular weight, unless otherwise specified.

Preferable examples of the compound represented by formula (I) are shown below, but the present invention is not intended to be limited to those.

(I-1) 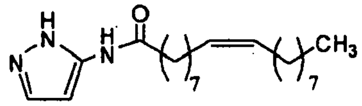

(I-2) 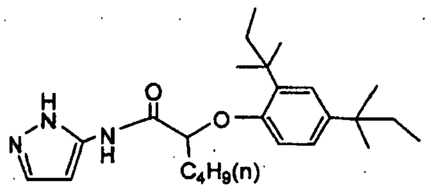

(I-3) 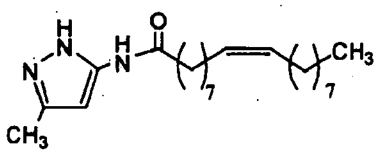

(I-4) 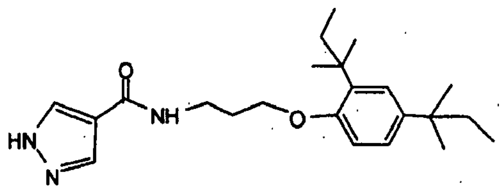

(I-5) 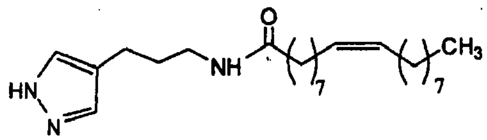

(I-6) 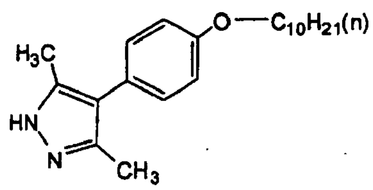

(I－7)

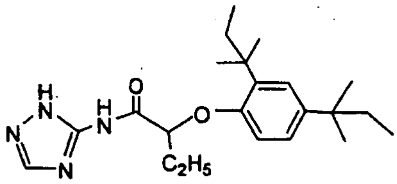

(I－8)

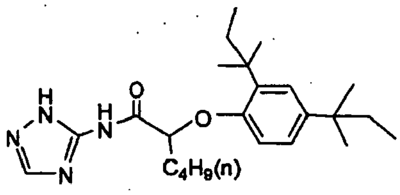

(I－9)

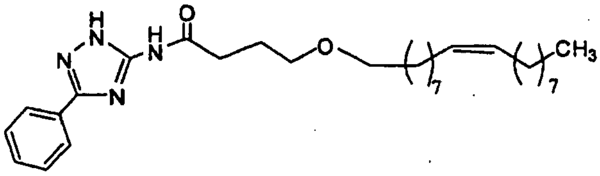

(I－10)

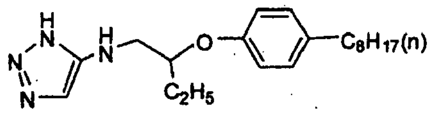

(I－11)

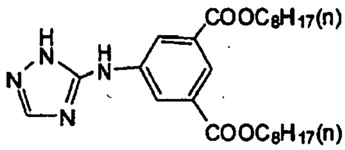

(I－12)

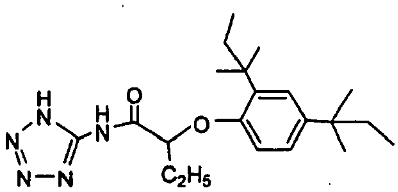

It is preferable that the compound represented by formula (I) is used in an amount within the range from 0.1 to 20 equivalents (weight ratio), particularly preferably from 1 to 5 equivalents (weight ratio), to the pigment precursor.

The compound represented by formula (I) is to exist when the organic pigment precursor is converted to the organic pigment fine-particle. The meaning of this existence may be co-existence being dissolved beforehand into the same solution before the conversion, but in the case where the conversion is conducted in the flow process as will be described below, the compound may be dissolved into another solution different from the solution of the organic pigment precursor, and may be introduced into the precursor solution at the same time when the organic pigment precursor is

allowed to convert to the pigment fine-particles.

In the production method of the present invention, it is preferable to induce conversion of the solution of the organic pigment precursor to the pigment fine-particle in the course of flow in a channel. Such conversion in the course of flow allows precipitation of the pigment fine-particles, under a condition more uniform than that by a batch method of carrying out the reaction normally in a reactor vessel. It is more preferably carried out in the state of laminar flow or in the transient state between laminar flow and turbulent flow. The laminar and turbulent flows are explained, respectively, as follows. When causing water to flow into a pipe, inserting a narrow pipe into the pipe along the central axis thereof and then injecting a colored solution into the water, the colored solution flows in the form of a single line while the flow velocity of the water is small or slow. Thus, the water flows straightly and in parallel to the wall of the pipe. However, when the flow velocity is raised to reach a given flow velocity, turbulence is suddenly caused in the water flow. Consequently, the colored solution is mixed with the water flow so that the whole of the solution and water becomes a colored flow. The former flow is called laminar flow, and the latter flow is called turbulent flow. The intermediate flow between them is called the transient-state flow.

Whether a flow turns to a laminar flow or turbulent flow depends on whether or not the Reynolds number, which is a dimensionless number showing the state of the flow, is not more than a given critical value. As the Reynolds number is smaller, a laminar flow is more apt to be caused. The Reynolds number Re of the flow in a pipe is represented by the following equation:

$$Re=D\langle \upsilon_x \rangle \rho/\mu$$

wherein D represents the equivalent diameter of the pipe, $\langle \nu_x \rangle$ represents the sectional average velocity, $\rho$ represents the density of the flow, and $\mu$ represents the viscosity of the flow. As can be understood from this equation, the Reynolds number is smaller as the equivalent diameter is smaller. Therefore, in the case that the equivalent diameter is in the order of $\mu$m, a stable laminar flow is apt to be formed. In addition, the physical properties of the solution, such as the density and the viscosity thereof, also have influence on the Reynolds number. As the density is smaller and/or the viscosity is larger, the Reynolds number is smaller. It can be, therefore, understood that a laminar flow is apt to be formed in that case.

The critical value of Reynolds number when the flow changes, is called a critical Reynolds number. The critical Reynolds number is not always constant, but typically the following value (see Fumimaru Ogino Ed., "Chemical Engineering Handbook", p.37, 2004, Asakura Publishing Company Ltd.).

| | |
|---|---|
| $Re < 2,300$ | Laminar flow; |
| $Re > 4,000$ | Turbulent flow; and |
| $4,000 \geq Re \geq 2,300$ | Transient state (transitional region) |

For example, the flow in transient state includes Karman-vortex flow and Taylor-vortex flow including from the laminar vortex flow region to the turbulent flow region. (See, for example, (1) "Chemical Engineering Handbook, revised 6th Ed.", Soc. of Chemical Engineers, Japan Ed., Maruzen Co., Ltd.; (2) "Dictionary of Science and Chemistry", 5th Ed., Iwanami Shoten; (3) M. Engler et al., "Effective Mixing by the Use of Convective Micro Mixers", Conference Proceedings, 2005 Spring National Meeting, AIChE, 128d; and (4) JP-A-2006-342304.)

It is possible to prepare efficiently a pigment fine-particle dispersion small in particle size, narrow in its distribution, low in turbidity, and high in transparency, by forming particles (from nucleation to nucleus growth) in the course of flow in the laminar flow or transient state ($Re < 4000$) and stabilizing the velocity of particle growth.

Pigment fine-particles prepared in the course of flow under the condition described above, are particularly preferable, because they are excellent in particle size, its distribution, and dispersion stability, and also high in productivity. In particular, small turbidity of pigment fine-particles is important, since this relates to pigment fine-particles having narrow width in particle diameter distribution (which means to be excellent in monodispersity).

Next, the flow reactor that can be used in the production method of the present invention will be explained below. The flow reactor preferably has a channel (flow passage) of an equivalent diameter of 10 mm or less, more preferably a channel of an equivalent diameter of 1 mm or less. First, the equivalent diameter is described in below.

The equivalent diameter is a term also called a corresponding diameter, and in the present invention, the term is used in the same meaning as usually used in the field of mechanical engineering. That is, if a cylindrical pipe whose sectional area is equivalent to a pipe (or a channel in the production method of the present invention) having any sectional shape is assumed, the diameter of the equivalent cylindrical pipe corresponds to the equivalent diameter. The equivalent diameter ($d_{eq}$) is defined as:

$$d_{eq} = 4A/p$$

in which A is a sectional area of the pipe, and p is a wetted perimeter length (circumferential length) of the pipe. In the case of the cylindrical pipe, this equivalent diameter is equal to the diameter of the cylindrical pipe. The equivalent diameter is used for presuming fluidity or heat conducting characteristic of the pipe, on the basis of data of the equivalent cylindrical pipe, and expresses a spatial scale (a representative length) of a phenomenon. The equivalent diameter is:

$$d_{eq} = 4a^2/4a = a$$

in a squared pipe having a side length of a, and

$$d_{eq} = a/\sqrt{3}$$

in a triangle pipe having a side of a. Further, the equivalent diameter is:

$$d_{eq} = 2h$$

in a flow between paralleled plates having a channel height (h) (see, for example, edited by Nippon Kikai Gakkai, "Kikai Kougaku Jiten (Dictionary of Mechanical Engineering)," 1997, published by Maruzen, K. K.).

As the equivalent diameter of a channel is smaller, the surface area per unit volume (specific surface area) of said pipe is larger. When the channel turns into a micro-scale, which is preferably a size of 1 mm or less, the specific surface area becomes remarkably large so that the conduction efficiency of heat through the wall of the channel becomes very high. Since the heat conduction time (t) of a fluid flowing in the channel is represented by: $t=d_{eq}^2/\alpha$ (in which $\alpha$ is the heat diffusion rate of the fluid), the heat conduction time becomes shorter as the equivalent diameter becomes smaller. That is, if the equivalent diameter becomes 1/10, the heat conduction time becomes 1/100. Thus, when the equivalent diameter is in a micro-scale, the heat conduction speed is very high. Herein, such a reaction site (reaction field) is defined to as a micro reaction site.

A reactor providing such a preferable micro reaction site, which can be preferably used in the producing method of the present invention, is commonly called "microreactor" and is being developed greatly in recent years. Typical example of the microreactor is provided with a plurality of micro-channels (each corresponding to the above-mentioned reactor) each having an equivalent diameter (in terms of the area of a circle equivalent to the section thereof) of several micrometers to several hundred micrometers; and a mixing space connected to these micro-channels. In the micro-reactor, plural solutions can be introduced through the plural micro-channels into the mixing space, thereby mixing the solutions, or mixing the solutions and simultaneously causing chemical reaction.

Next, the following describes major different points of reaction by use of the above-described micro-reactor from reaction based on a batch-type by use of a tank or the like. In chemical reaction of a liquid phase and chemical reaction between two liquid phases, molecules generally encounter each other on the interface between the reaction solutions, to cause the reaction. Therefore, when the reaction is conducted in a microscopic space (micro-channel), the area of the interface becomes large in relation to the space so that the efficiency of the reaction increases remarkably. In addition, about the diffusion of molecules, the diffusion time is in proportion with the square of diffusion distance. This fact means that as the scale is made smaller, the mixing of the reaction solutions advances more by the diffusion of the molecules in the flow region, so as to cause the reaction more easily, even if the reaction solutions are not actively mixed. Further, in the microscopic space, since the scale is small, the flows tend to turn preferentially to laminar flows. Thus, the molecules existent in the solutions are diffused and exchanged from one laminar flow to another laminar flow on the interface where the solutions are in the states of laminar flows, and the solutions are mixed with each other with the transferred molecules.

When a micro-reactor, which has characteristics as described above, is used, the reaction time and temperature between the solutions therein can be more precisely controlled, compared with a conventional batch system, in which, for example, a tank having a large volume is used as a reaction site. Further, in the batch system, in particular, between solutions having a large reaction speed, sometimes reaction advances on a reaction contact face generated at the initial stage of mixing the solutions, and further a primary product generated by the reaction between the solutions subsequently

undergoes reaction in the container. Therefore, there may be a possibility that the resultant product becomes non-homogeneous or that aggregation or precipitation (crystals) of the product grows beyond necessity in the mixing container (batch) to get coarse. Contrary to the above, according to a micro-reactor that can be used in the present invention, solutions hardly remain in the mixing space (e.g. a mixing container) so as to flow continuously. Consequently, it is possible to restrain a primary product generated by the reaction between the solutions from undergoing subsequent reaction while the primary product remains in the mixing space. Thus, a pure primary product, which has been hardly taken out hitherto, can be taken out.

Further, when a chemical substance that can be produced in only a small amount by use of an experimental producing-apparatus, is tried to produce in a large amount by use of large-scale manufacturing facilities (i.e. scaling up), huge labor and very long period of time have been required hitherto, to gain the reproducibility of the manufacture in large-scale manufacturing facilities of a batch system as similar as the reproducibility of the production in the experimental producing-apparatus. However, by arranging a plurality of producing lines each using a micro-reactor in parallel (numbering-up) according to a necessary production quantity, labor and time period for gaining such the reproducibility may be largely reduced.

Preferable examples of the method for forming the channel that can be used in the producing method of the present invention will be explained. It is relatively easy to form a channel with an equivalent diameter of 1 mm or more with generally known machine processing techniques, but it is exceptionally difficult to form a channel with a size of 1 mm or less (micro size), especially with a size of 500 μm or less. A micro-size channel (micro-channel) is formed on a solid substrate by micro processing technique in many cases. The material of the substrate may be any stable material that is not apt to be corroded. Examples of the material include metal (e.g. stainless steel, hastelloy (Ni-Fe based alloy), nickel, aluminum, silver, gold, platinum, tantalum, and titanium), glass, plastics, silicone, Teflon (registered trademark), and ceramics.

Representative examples of the micro processing technique for forming the micro-channel include a LIGA (Roentgen-Lithographie Galvanik Abformung) method using X-ray lithography, a high aspect ratio photolithography method using EPON SU-8 (trade name), a micro discharge processing method (μ-EDM (Micro Electro Discharge Machining)), a high aspect ratio processing method for silicon by Deep RIE (Reactive Ion Etching), a hot emboss processing method, a photo-fabrication method, a laser processing method, an ion beam processing method, and a mechanical micro cutting processing method using a micro tool made of such a hard material as diamond. These techniques may be used alone or in combination. Preferable micro processing techniques are the LIGA method using X-ray lithography, the high-aspect ratio photolithography method using EPON SU-8, the micro discharge processing method (μ-EDM), and the mechanical micro cutting processing method. In recent years, investigations have been made for applying a micro-injection molding technique to engineering plastics.

When the micro channel is assembled, a joining technique is often used. A normal joining technique is roughly divided into solid-phase joining and liquid-phase joining. In joining methods generally used, typical examples of the joining method include pressure welding and diffusion bonding as the solid-phase joining; and welding, eutectic bonding, soldering, and gluing as the liquid joining. Further, at the time of assembling, it is desirable to use a highly precise joining method in which dimension accuracy is maintained in such a way that deterioration of material due to high temperature heating, or destruction of a micro-structure such as a channel by a large deformation of material does not take place. Examples of such a technique include silicon direct joining, anode joining, surface activation joining, direct joining using hydrogen bond, joining using aqueous hydrogen fluoride solution, Au-Si eutectic bonding, and void-free bonding.

The equivalent diameter of the channel in the reactor that can be used in the producing method of the present invention is preferably 10 mm or less, more preferably 1 mm or less, further preferably 10 μm to 1 mm, and particularly preferably 20 to 500 μm. Further, the length of the channel is not particularly limited, but it is preferably 1 mm or more but 10 m or less, more preferably 5 mm or more but 10 m or less, and particularly preferably 10 mm or more but 5 m or less.

In the producing method of the present invention, the organic pigment fine-particles are preferably formed in a liquid dispersion, and the formation of the dispersion is preferably performed while flowing in a channel(s), that is, by a continuous flowing method. The number of channels in a flow reactor may be one. Alternately, many channels may be arranged in parallel (i.e. numbering-up) as needed, to increase a processing amount thereof. The number of channels to be arranged in parallel is determined depending on the type and target amount of organic pigment fine-particles to be produced, and is preferably within the range from 5 to 1,000, more preferably from 10 to 100. The channels are not limited to those formed on a solid substrate by use of the micro processing technique, and may be, for example, various available fused silica capillary tubes each having an inner diameter of several micrometers to several hundred micrometers. Various silicon tubes, fluorine-containing resin tubes, stainless steel pipes, and PEEK (polyether ether ketone) pipes, each having an inner diameter of several micrometers to several hundred micrometers, which are commercially available as parts for high-performance liquid chromatography or gas chromatography, can also be used.

Hitherto, with respect to micro-reactors, devices that are aimed to improve reaction efficiency and the like, have been reported. For example, JP-A-2003-210960, JP-A-2003-210963 and JP-A-2003-210959 are concerned with micro-mixers. In the present invention, these micro-devices may also be used.

In the producing method of the present invention, the channel may be subjected to a surface treatment according to an object. In particular, when handling an aqueous solution, since the adsorption of a sample to glass or silicon may become a problem, the surface treatment is important. In the fluid control in the micro-sized channel, it is desirable to realize this without incorporating a movable part requiring a complicated manufacturing process. For example, a hydrophilic region and a hydrophobic region are prepared in the channel by the surface treatment, so that it becomes possible to treat a fluid by using a difference in surface tension exerting on the boundary between these regions. The method used for surface-treating glass or silicon in many cases is hydrophobic or hydrophilic surface-treatment by using a silane coupling agent.

In order to introduce a reagent, a sample, or the like, into the channel to mix therein, a fluid control function is needed. Specifically, since the behavior of the fluid in the micro channel has properties different from those of a macro-scale, a control method appropriate for the micro-scale should be considered. A fluid control method is classified into a continuous flow system and a droplet (liquid plug) system according to the formation, while it is also classified into an electric driving system and a pressure driving system according to the driving force.

A more detailed description of these systems will be given hereinafter. The most widely used system as a formation for treating a fluid is the continuous flow system. When the flow is controlled in the continuous flow system, generally, the entire portion inside the micro-channel is filled with a fluid, and the fluid as a whole is driven by a pressure source such as a syringe pump that is provided outside the channel. In this method, although there is such a difficulty that dead volume is large, and the like, the continuous flow system has such a great merit that the control system can be realized with a relatively simple set-up.

As a system which is different from the continuous flow system, there is provided the droplet (liquid plug) system. In this system, droplets partitioned by the air are made to move inside the reactor or inside the channel leading to the reactor, and each of the droplets is driven by air pressure. During this process, a vent structure for allowing air between droplets and channel walls, or air between the droplets as necessary, to escape to the outside; a valve structure for maintaining pressure inside the branched channels independently from pressure at other portions; and the like, must be provided inside the reactor system. Further, a pressure control system having a pressure source or a switching valve must be provided outside the reactor system, in order to move the droplets by controlling the pressure difference. Thus, in the droplet system, although the apparatus configuration and the structure of the reactor become rather complicated as stated above, a multi-stage operation is enabled, for example, plural droplets are individually operated and some reactions are sequentially performed, and the degree of freedom concerning the system configuration becomes high.

As the driving system for performing the fluid control, there are generally and widely used an electrical driving method in which a high voltage is applied between both ends of a channel to generate an electro-osmotic flow, thereby fluid is moved; and a pressure driving method in which a pressure is applied to a fluid from the outside of the channel using a pressure source to move the fluid. It is known that both systems are different in that, for example, as the behavior of the fluid, the flow velocity profile in the cross-section of the channel becomes a flat distribution in the case of the electrical driving system, whereas it becomes a hyperbolic flow distribution in the pressure driving system, in which the flow velocity is high at the center of the channel and low at the wall surface part. Therefore, the electrical driving system is suitable for such an object that a movement is made while the shape of a sample plug or the like is kept. In the case where the electrical driving system is performed, since it is necessary that the inside of the channel is filled with the fluid, the form of the continuous flow system must be adopted. However, since the fluid can be treated by an electrical control, a comparatively complicated process is also realized, for example, a concentration gradient varying with time is formed by continuously changing the mixing ratio of two kinds of solutions. In the case of the pressure driving system, the control can be made irrespective of electrical properties of the fluid, and secondary effects such as heat generation or electrolysis may not be considered, and therefore, an influence on the substrate (component) hardly exists, and its application range is wide. On the contrary, a pressure source must be provided outside, and for example, response characteristics to manipulation are changed according to the magnitude of a dead volume of a pressure system, and it is necessary to automate the complicated process.

In the producing method of the present invention, although a method to be used as a fluid control method is suitably selected according to its object, the pressure driving system of the continuous flow system is preferable.

According to the producing method of the present invention, by applying external energy according to the need to an organic pigment precursor that is soluble in an organic solvent in a flow reactor, organic pigment fine-particles can be provided, which have uniform particle diameters that cannot be attained by those of particles formed in a flask. Further, by numbering up (providing a parallel arrangement) of the flow reactors, it is possible to mass-produce the organic pigment fine-particles and an organic solvent liquid dispersion of the fine-particles, with good reproducibly.

A preferred embodiment of the producing method of the present invention is to generate the organic pigment fine-particles, by subjecting the solution of the organic pigment precursor dissolved into the organic solvent, to a reaction due to external energy application, under the flow condition. Examples of the energy to be applied from the outside include heat (including microwaves), light (particularly UV rays), and ultrasonic waves, with a particular preference be given to heating to a high temperature by heat energy. Examples of the heating to a high temperature include: heating

by placing the whole reactor having a reaction channel in a container whose temperature is controllable; or by heating with a heating function, such as a metal resistance wire or polysilicon, incorporated in the reactor. Alternatively, heating and cooling effects may be given externally by bringing a Peltier device into contact with the channel. It is also possible to provide a reaction channel in a microwave generator whose specific instant and even (or uniform) heating of the inside effects and local superheating effects can be used for heating. Any other methods can be preferably employed as long as they enables to conduct instantly and high-temperature heating in the course of flow. The heating methods can be appropriately selected depending on purposes and channel materials.

Fig. 1 is a plane view schematically illustrating, as a preferred embodiment of the reactor that can be used for the producing method of the present invention, an apparatus provided with a means for heating a part of the channel to a high temperature and then cooling the heated part. Fig. 2 is a sectional view showing the cross-section along the line I-I in Fig. 1. It should be noted that the present invention is not intended to be limited to these. In this embodiment of the apparatus, although the mode having a single channel is shown, it is possible to provide a plurality of channels as described above.

The reactor 10 of this embodiment has a heater 124 for heating and a Peltier device 125 for cooling. The reactor 10 has an inlet 121, an outlet 122, and a channel 123. The sectional shape of the channel 123 in a direction perpendicular to its longitudinal direction can be processed by microprocessing according to the need, and the shape is preferably nearly trapezoidal or rectangular. When the width W and depth H of the channel are set to be a micrometer size, the heat exchange rate becomes quite fast, and heating and cooling can be conducted instantly.

In the reactor 10 of this embodiment, a solution containing an organic pigment precursor and a polymerizable compound is introduced from the inlet 121. In the course of flow of the solution in a region of the channel indicated by the channel length "a" in which the heater 124 is built, the organic pigment precursor is converted to the organic pigment, and, at the same time, the polymerizable compound is polymerized. Then, via a region of the channel indicated by the channel length "b", the thus-formed organic pigment is cooled in the course of flow in a region of the channel indicated by the channel length "c" in which the cooling device of the Peltier device 125 is built, to form nuclei of the organic pigment. Then, the particles further grow in the course of the flow via the channel until they reach the outside of the channel from the outlet 12, and the resultant fine-particles are discharged and collected as a liquid dispersion containing the organic pigment fine-particles.

Fig. 3 is an explanatory view showing a constitution of the second reactor (a microreactor) 20 as another preferable embodiment that can be used in the producing method of the present invention. In the reactor 20 of this embodiment, a solution of the organic pigment precursor is contained in the solution tank 101, and a contact fluid to be contacted with the organic pigment precursor solution is contained in the fluid tank 102. The organic pigment precursor solution is fed to a T connector 109 via the channel 104. On the other hand, the contact fluid is fed to the T connector 109 via the channel 105. Subsequently both the organic pigment precursor solution and the contact fluid are allowed to come into contact with each other in the T connector 109, and the organic pigment precursor is thermally converted to the organic pigment by heating, resultantly the liquid dispersion in which the fine-particles of the organic pigment generated arrives to a collecting tank 103 through the channel 106.

The organic pigment precursor solution is drawn up by a flow controller 116, and, while flowing in the channel 104 under the condition that a valve 115 opens, it is fed to a heating tank 112 composed of an oil bath. The heating tank (low temperature heating tank) 112 is kept warm at the temperature within the range from 50 to 150°C, for example, and it heats the organic pigment precursor solution in the channel 104. Although the length of the channel 104 to be soaked in the heating tank 112 is not limited particularly, it is preferable that, by installing a coil-shaped part $S_1$ like this embodiment, for example, the soaked channel length is set within the range from 100 to 5,000 mm.
The solution which has been preheated by the heating tank 112 is kept warm by a heat insulating material 111, and is fed to the T connector (T reaction part) 109 with approximately the same temperature. In this occasion, the pressure and the temperature in the channel 104 are measured by means of a pressure gauge 107a and a thermometer 108a.

The contact fluid is drawn up from the fluid tank 102 by the flow controller 116, and it flows through the inside of the channel 105, to be fed to the heating tank 113 which is composed of the oil bath. The heating tank (high temperature heating tank) 113 is kept warm around the temperature, for example, within the range from 200 to 500°C, and it heats the contact fluid in the channel 105. Although the length of the channel 105 to be soaked in the heating tank 113 is not limited particularly, it is preferable, for example, that, by installing a coil-shaped part $S_2$ like the this embodiment, the channel length to be soaked is set within the range from 100 to 10,000 mm. The contact fluid is fed to the T connector 109 as a high temperature fluid as the above heated state, and is allowed to come into contact with the organic pigment precursor solution.

The situation at the time of coming into contact with the fluid and the solution each other, will be described further in detail below, with referring to the enlarged view of the T connector 109 as shown in a circle in Fig. 3. In this embodiment, the temperature of the organic pigment precursor solution is maintained at almost the same temperature as the preheated temperature in a just before contact part 109a at the solution side of the T connector. On the other hand, the temperature of the contact fluid is maintained at the same temperature as the preheated temperature, in a

just before contact part 109b at the high temperature contact fluid side. Then, both the high temperature contact fluid and the organic pigment precursor solution heated to the high temperature together, are allowed to come into contact at a contact part 109d each other, and are fed to a just after contact part 109c. Although it depends on the flow velocity of the fluid and solution, the diameter of the channel, or the like, the adoption of the T connector in a contact reaction part like this embodiment, is preferable, because it enables to form a turbulence flow region at the contact part 109d and in its vicinity, and to form a laminar flow region in the just after contact part 109c and in the channel following that. As described, by forming both the laminar flow region and the turbulence flow region under the desired conditions in the course of flowing, it is possible to obtain, as the foregoing description, a liquid dispersion of the organic pigment fine-particles having still more excellent characteristics.

The just after the contact part 109c and the channel extending beyond it exist in the heat tank 113, and they are maintained at the temperature in the heat tank. Although the length of the channel 106 to be soaked in the heating tank 113 is not limited particularly, it is preferable that, by installing a coil-shaped part $S_3$ like this embodiment, for example, the soaked channel length is set within the range from 10 to 1,000 mm. Subsequently, the liquid dispersion is fed to a cooling tank 114 composed of an oil bath, and the heat insulating material 111 is applied at the channel 106 linking over from the heating tank 113 to the cooling tank 114 so that the temperature of the pigment fine-particles liquid dispersion in the channel 106 is maintained until then. Additionally, a pressure gauge 107b and a thermometer 108b are installed in the channel 106 where the heat insulating material 111 is applied to, and both the pressure and the temperature in the channel are measured, respectively.

In this embodiment, the cooling tank 114 is set at the temperature, for example, within the range from 100 to -100°C. In this way, the pigment fine-particles liquid dispersion in the channel 106 is rapidly cooled down, and the fine-particles are stabilized. Although the length of the channel 106 to be soaked in the heating tank 114 is not limited particularly, it is preferable that, by installing a coil-shaped part $S_4$ like this embodiment, for example, the soaked channel length is set within the range from 1 to 50 mm. Also, a pressure gauge 107c and a thermometer 108c are installed in the channel 106 coming out from the cooling tank 114, and both the pressure and the temperature in the channel are measured respectively. Then, the liquid dispersion containing the organic pigment fine-particles is collected through the valve 115 to a collecting tank 103.

Each parts and devices used for the flow reactor 20 of this embodiment may be employed as usual, but it is preferable to employ SUS 316 (stainless steel) for the materials composing the channels, taking compression durability into consideration.

Fig. 4 is an explanatory view of a device showing a constitution thereof in another preferable embodiment different from the above. In a reactor 30, none of the contact fluid, the channel for supplying the contact fluid, peripheral devices, and the T connector exists at all. Namely, the organic pigment precursor solution is preheated by the low temperature heating tank 112 while flowing through the inside of the channel 104, and arrives at the high temperature heating tank 113. Then, while passing through the channel 104 soaked in the high temperature heating tank 113, the organic pigment precursor is converted into the organic pigment mainly in the coil-shaped part $S_3$. The thus-converted organic pigment occurs as fine particles in the liquid, and the liquid dispersion thereof flows through the channel 106. Additionally, although a border between the channel 104 of the organic pigment precursor and the channel 106 of the liquid dispersion is not clear since there is no contact part 109b in a flow reactor for comparative examples, but both channels can be functionally classified into different types at around a point U, by observing before or after that the organic pigment fine-particles occur.

In the flow reactor 30, the liquid dispersion containing the organic pigment fine-particles is then fed to the cooling tank 114 through a region where the insulating material 111 exists. In this occasion, the liquid dispersion is rapidly cooled down mainly in the coil-shaped part $S_4$, and is collected into a collecting tank 103. In the flow reactor for comparison, any contact fluid does not exist for contact. Accordingly, the thermal conversion from the organic pigment precursor to the organic pigment is allowed to proceed by heat spreading from a channel wall surface of the channel including coil-shaped part $S_3$ in the high temperature heating tank 113.

The organic pigment and the fine-particles thereof are apt to be formed in the vicinity of the channel wall, and may adhere to the channel wall surface. Although it depends on the kind of the pigment to be used, the flow velocity, the heating temperature, or the like, there may be the case that, for example, the organic pigment fine-particles adhere mainly onto the inside surface of the coil-shaped part $S_3$ in the flow reactor 30, and resultantly cause to block the channel. This induces to gradually elevate the pressure at the pressure gauge 108b, and completely block the channel finally. In the present invention, using the compound having the azole ring in its molecule and allowing it to coexist with a pigment compound at the time of formation of the formation of fine particles, it is possible to improve such a channel blocking. Further, the adoption of the flow reactor 20 of this embodiment is still more effective with respect to the flow reactor 30, and the adhesion of the organic pigment fine-particles onto the channel inner wall surface can be improved extremely. As a result, it can be realized to conduct a stable and continuous production of the organic pigment fine-particles of uniform particle diameter with nanometer size in a large production amount.

Figs. 5-1 and 5-2 are exploded perspective views schematically showing the structure of flow reactors (micro-

reactors) 100 as still another preferable embodiment that can be used in the producing method of the present invention. Fig. 6 is a sectional view showing the cross-section along the line II-II of the devices of Figs. 5-1 and 5-2, as shown in the state of being assembled.

The flow reactor 100 of this embodiment is a microdevice which is composed of plural units freely attachable or detachable that are coupled each other without any pipes, and which is for conducting multi-step mixing of process fluids. The coupling of the plural units achieves microchannels allowing the above process fluids to flow through the above device, and a channel allowing a medium for heat exchange to flow. At the same time, the above device is designed for controlling of the temperature part by part independently. Further, the flow reactor 100 is preferably having the following structure: in which the reactor is structured with coaxial multi-cylindrical channels, which are formed of the coupled plural units with the microchannels for allowing the above process fluids to flow and the channel for allowing the medium for heat exchange to flow. The device section constituting the coaxial multi-cylindrical channels preferably has an outer circular pipe portion constituting a wall surface of the channel, and an inner cylindrical portion closed at its tip, and both the outer circular pipe portion and the cylindrical portion constitute a circular pipe-shaped microchannel which allows the process fluid to flow as a thin sheet-shaped laminar flow. The above structure further preferably has an inner circular pipe portion at further inside of the cylinder portion, so that both the inner circular pipe portion and the cylinder portion constitute a circular pipe-shaped channel which allows the above medium for heat exchange to flow, by which structure the discharge of the medium for heat exchange after heat exchange is conducted through a cavity at the inside of the inner circular pipe portion. Next, the above-mentioned flow reactor will be described in detail below.

In Fig. 5-1, units 1 to 5 are illustrated, and in Fig. 5-2, units 6 to 10 are illustrated. The unit 1 has a circular pipe portion 17 whose protruding tip opens, and this circular pipe portion 17 is inserted into a through hole 24 of the unit 2 without clearance. By this inserted structure, an inner channel (cavity) 13 of the circular pipe portion 17 communicates with a channel 11a, and constitutes a discharge channel of a medium p for heat exchange (for example, silicone oil) after heat exchanged. The medium p for heat exchange is supplied to a pipe shaped channel 23, which is made by the coupling of the unit 1 and the unit 2, and in which the channels 11b and 11c communicate with the outside of the circular pipe portion 17. Then, the medium p is discharged through the channel 13, as described above.

In the flow reactor 100 of this embodiment, the organic pigment precursor solution q (hereinbelow, which is also explained as "process fluid q") which is to be introduced as the process fluid, passes to a channel 43 at the inside of a hollow pencil structure surrounded with an external wall 46 of the unit (circular pipe portion) 4, through channels 22a and 22b of the unit 2 and channels 32a and 32b of the unit 3. The cylinder portion 28 of the unit 2 is constituted as the hollow pencil structure whose tip is closed. The unit 3 is composed of a heat insulating material, and the cylindrical portion 28 of the unit 2 is inserted into a through hole 34 of the unit 3 without clearance. The unit 4 has an external wall 46 of the pencil-type hollow structure exhibiting an external wall function conducting heat exchange by the process fluid q and the medium p for heat exchange. Further, the cylindrical portion 28 of the unit 2 and the external wall 46 of the unit 4 form a pencil-type circular pipe-shaped clearance. The clearance constitutes a microchannel (a confluence region) 43, and the process fluid q flows through it, and preferably constitutes a thin sheet-shaped laminar flow. As thus described, the organic pigment precursor solution (process fluid q) is preheated to, for example, the temperature within the range from 50 to 150°C.

In a channel (a mixing region) 53 of the unit 5, the process fluid q and a process fluid r supplied via channels 52a and 52b, are allowed to mix each other. In the flow reactor 100 of this embodiment, the contact fluid is supplied as the process fluid r provided by preheating it to the temperature, for example, within the range from 200 to 350°C that is higher than the organic pigment precursor solution (process fluid q). A process fluid s generated by the above mixing is fed from the first step mixing j (Fig. 5-1) as explained above to the second step mixing k (Fig. 5-2), through 2-way branched channels 52c and 52d. Then, the process fluid s passes through the unit 6 without contact with the medium t for heat exchange, further through the units 7 and 8, and is introduced into the unit 9 of the second step mixing k in a manner like flowing smoothly. Upon the passing through, in the process fluid s, the organic pigment precursor is converted to the organic pigment, and the resultant fluid is made to be the liquid dispersion in which the organic pigment fine-particles generate. In the flow reactor 100 of this embodiment, it is preferable that the liquid dispersion of the pigment fine-particles is collected as the process fluid s, but as another aspect of, for example, allowing the fluid and the low temperature medium for cooling to mix each other, the following second mixing step is described.

The cylinder portion 68 of the unit 6 is composed of an insulating material, and on the other hand, the circular pipe portion 67 is composed of stainless steel. Further, as described above, in an arrangement of without coming into contact with the process fluid s flowing in the channels 62c and 62d, the medium t (for example, silicone oil) for heat exchange is supplied from channels 61b and 61 c, and discharged via the channel 63 in the circular pipe portion 67 and from the channel 61a. The circular pipe portion 67 of the unit 6 is inserted into a through hole 74 of the unit 7 without clearance. The unit 7 has a cylinder portion 78 of the hollow pencil structure whose tip closes. The process fluid s is supplied to the outside of the cylinder portion 78 via the channels 72c and 72d, and on the other hand, the medium t for heat exchange is supplied to a circular pipe shaped channel 73 via the channels 71b and 71c, respectively. The unit 8 is composed of a heat insulating material, and the unit 8 is coupled with the unit 7 by inserting the cylinder portion 78 of

the unit 7 into a through hole 83 of the unit 8 without clearance. Further, the process fluid s is supplied to a circular pipe-shaped channel (confluence region) 94 of the next unit 9 via the channels 82c and 82d. The unit 9 has an external wall 96 of the pencil-type hollow structure exhibiting an external wall function conducting heat exchange by the process fluid s and the medium t for heat exchange. The cylinder portion 78 of the unit 7 and the external wall 96 of the unit 9 form a pencil-type circular pipe-shaped clearance, and the process fluid s flows through this clearance, and preferably constitutes a thin sheet-shaped laminar flow. In this way, a liquid dispersion (process fluid v) containing the organic pigment fine-particles and a medium for cooling are cooled down to the temperature of, for example, within the range from 100 to -100°C.

In this embodiment, although the materials for the unit 1, unit 2, unit 4, unit 5, unit 7, unit 9, and unit 10 are not particularly limited as long as the materials each are a thermally conductive material, it is preferable to use SUS 316. Further in this embodiment, although the materials for the predetermined portions of the units 3, 6, and 8 are not particularly limited as long as the materials each are a thermally insulating material, it is preferable that the materials for the unit 3 and the unit 8 are Sepra. Regarding the unit 6, it is preferable that the material for the cylinder portion 68 is Sepra and the material for the protruded circular pipe portion 67 is SUS 316. The flow reactor 100 of this embodiment can suitably respond for a reaction requiring a pressure resistance, and the flow reactor 100 can be provided with a pressure resistant structure capable of bearing the internal pressure of the channel with, for example, 3 MPa or more. Further, taking the heating of the organic pigment precursor to the temperature of the boiling point of the solvent for dissolving it or higher into consideration, it is preferable to finish the joint portion, and to carry out the strength design of each unit.

In the flow reactor 100 of this embodiment, it is preferable that the heat exchange capability in the heat exchange structure formed by coupling the above plural units is 100 K/s or greater in the temperature change per unit time. In addition, it is preferable to allow the process fluids mixing each other at predetermined phase, and to set the time period until allowing the process fluids mixing each other in the next stage becomes 1 second or shorter.

The conversion reaction temperature for converting the organic pigment precursor to the organic pigment is preferably within the range from 150 to 500°C, more preferably from 200 to 500°C, and particularly preferably from 200 to 400°C. Accordingly, the temperature in the channel 13 is appropriately adjusted in the above range depending on the kind of the pigment precursor. When the temperature is the boiling point or higher of the solvent dissolving the pigment precursor, it is preferable that a check valve is mounted on the inlet 11 and a pressure controlling valve is mounted on the outlet 12, to keep the pressure in the channel at a high pressure so that the organic solvent does not boil at all. Although the pressure is not particularly limited, it is preferably within the range from 0.1 to 50 MPa, and particularly preferably from 0.2 to 10 MPa. The temperature at the time of introducing the solution of the organic pigment precursor into the flow reactor is not particularly limited, but it is practical to set this to a temperature from 20 to 150°C.

Regarding the flow velocity (flow rate) of the fluid flowing through the channel 13, it is preferably within the range from 0.1 mL/hr to 300 L/hr, more preferably from 0.2 mL/hr to 30 L/hr, further preferably from 0.5 mL/hr to 15 L/hr, and particularly preferably from 1.0 mL/hr to 6 L/hr.

Examples of the solvent for dissolving the organic pigment precursor that can be used in the production method of the present invention, include organic solvents; such as an alcohol compound solvent (e.g. methanol, ethanol, ethylene glycol, propylene glycol, diethylene glycol, or fluorine-containing alcohol compound (e.g. 2,2,3,3-tetrafluoro-1-propanol)), an ether compound solvent (e.g. tetrahydrofuran, dioxane, ethylene glycol monomethyl (or ethyl) ether, diethylene glycol monomethyl (or ethyl) ether, or triethylene glycol monoethyl (or butyl) ether), an ester compound solvent (e.g. ethyl acetate, butyl acetate, ethyl propanoate, butyl isobutyrate, propylene glycol 1-monomethyl ether 2-acetate, diethylene glycol monobutyl ether acetate), an amide compound solvent (e.g. dimethylformamide, dimethylacetamide, N-methylpyrrolidone 1,3-dimethyl-2-imidazolidinone), a sulfoxide compound solvent (e.g. dimethylsulfoxide or sulfolane), a halogen compound solvent (e.g. chloroform, or dichloromethane), a ketone compound solvent (e.g. acetone, methyl ethyl ketone, or cycloxanone), a hydrocarbon compound solvent (e.g. n-hexane, toluene, or ethyl benzene), a nitrile compound solvent (e.g. acetonitrile, or, isobutyronitrile). Preferable examples include the ether compound solvent, the ester compound solvent, the ketone compound solvent, the hydrocarbon compound solvent, or the nitrile compound solvent, and more preferable examples include the ester compound solvent or the ketone compound solvent. From the viewpoint of easiness in post-treatment of condensation or the like and internal pressure elevation in the flow-type reaction container at the time of heating, particularly preferable solvents can be selected from among the above described solvents having the boiling point within the range from 100°C to 150°C. Additionally, these solvents may be used alone, or alternatively, may be used by combining two or more of those. Further, a mixed solvent prepared by allowing the liquid polymerizable compound and the above organic solvent to dissolve compatibly, may be used as a medium for dissolving the organic pigment precursor. These solvents are not necessarily anhydrous, and may contain water to an extent that the organic pigment precursor does not precipitate and that the organic solvent does not cause phase separation.

The amount of the solvent to be used (when mixing with the polymerizable compound, total amount of the mixed solvent) is not particularly limited as long as the amount is sufficient for being capable of dissolving the organic pigment precursor homogeneously, but it is preferably within the range from 10 to 500 times, more preferably from 20

to 200 times, that of the organic pigment precursor, in terms of mass ratio.

In the production method of the present invention, it is presumed that the compound represented by formula (I) appropriately controls a velocity of forming a pigment nucleus from pigment molecule, by having a hydrogen bond with the pigment molecule generated from the pigment precursor, and resultantly suppresses the block of the channel. At the same time, even after the formation of the pigment particles, effects of suppressing aggregation thereof and stabilizing the resultant dispersion are exhibited in the production of the present invention, another any dispersion stabilizer may be coexisted in order to further improve the stability of the dispersion. Examples of the dispersing agent that can be coexisted, include a surfactant, an organic pigmentary dispersing agent, or a polymer dispersing agent. Only a single dispersing agent may be used, or, alternatively, two or more dispersing agents may be used in combination.

With regard to the surfactant, any of an anionic surfactant, cationic, or nonionic surfactant may be employable so long as it can be dissolved in the solvent that can be used in the present invention, but the nonionic surfactant is preferable in relation with solubility. Examples of the nonionic dispersing agent (nonionic surfactant) include polyoxyethylene alkyl ethers, polyoxyethylene alkyl aryl ethers, polyoxyethylene fatty acid esters, sorbitan fatty acid esters, polyoxyethylene sorbitan fatty acid esters, polyoxyethylene alkylamines, and glycerin fatty acid esters. Among these, polyoxyethylene alkyl aryl ethers are preferable. These nonionic dispersing agents may be used alone or in combination of two or more thereof.

The organic pigmentary dispersing agent is defined as a pigmentary dispersing agent derived from an organic pigment as a parent substance, and prepared by chemically modifying a structure of the parent substance. Examples of the pigmentary dispersing agent include sugar-containing pigmentary dispersing agents, piperidyl-containing pigmentary dispersing agents, naphthalene- or perylene-derivative pigmentary dispersing agents, pigmentary dispersing agents having a functional group linked through a methylene group to a pigment parent structure, pigmentary dispersing agents (parent structure) chemically modified with a polymer, pigmentary dispersing agents having a sulfonic acid group, pigmentary dispersing agents having a sulfonamido group, pigmentary dispersing agents having an ether group, and pigmentary dispersing agents having a carboxylic acid group, carboxylic acid ester group or carboxamido group.

Specific examples of the polymer dispersing agent include polyvinyl pyrrolidone, polyvinyl alcohol, polyvinyl methyl ether, polyethylene oxide, polyethylene glycol, polypropylene glycol, polyacrylamide, vinyl alcohol/vinyl acetate copolymers, partial-formal products of polyvinyl alcohol, partial-butyral products of polyvinyl alcohol, vinylpyrrolidone/vinyl acetate copolymers, polyethylene oxide/propylene oxide block copolymers, polyacrylic acid salts, polyvinyl sulfuric acid salts, poly(4-vinylpyridine) salts, polyamides, polyallylamine salts, condensed naphthalenesulfonic acid salts, styrene/acrylic acid salt copolymers, styrene/methacrylic acid salt copolymers, acrylic acid ester/acrylic acid salt copolymers, acrylic acid ester/methacrylic acid salt copolymers, methacrylic acid ester/acrylic acid salt copolymers, methacrylic acid ester/methacrylic acid salt copolymers, styrene/itaconic acid salt copolymers, itaconic acid ester/itaconic acid salt copolymers, vinylnaphthalene/acrylic acid salt copolymers, vinylnaphthalene/methacrylic acid salt copolymers, vinylnaphthalene/itaconic acid salt copolymers, cellulose derivatives, and starch derivatives. Besides, any of natural polymers can be used, examples of which include alginic acid salts, gelatin, albumin, casein, gum arabic, tragacanth gum, and ligninsulfonic acid salts. These polymer dispersing agents may be used alone or in combination of two or more thereof.

In the present invention, the amount of the dispersing agent to be used is preferably within the range from 0.1 to 250 parts by mass, more preferably from 1 to 100 parts by mass, to 100 parts by mass of the organic pigment, to further improve the uniform dispersity and storage stability of the organic pigment fine-particles.

In the measuring method of the particle diameter of the organic pigment fine-particles contained in the liquid dispersion of the pigment fine-particles, the average size of the group of the particles can be expressed by a numerical value. Examples of the numerical value of the particle diameter which is widely used, include mode diameter, which shows the maximum value of the particle diameter distribution; median diameter, which corresponds to the central value of the integrated distribution curve thereof; and various average diameters (e.g., length average diameter, area average diameter, mass average diameter, number average diameter (MN), volume average diameter (MV), etc.). In the present invention, the particle diameter is expressed with the volume average diameter (MV).

In the present invention, regarding the average particle diameter of the organic pigment fine-particles in the liquid dispersion, the particle diameter in the liquid dispersion before condensation (particle diameter before condensation) and the particle diameter in the liquid dispersion which has been condensed and is diluted again (particle diameter after condensation) may be distinguished separately, in some cases . With regard to the particle diameter before condensation, it is generally measured about the liquid dispersion itself with 5% by mass or less before the condensation. On the other hand, with regard to the particle diameter after condensation, it is measured about the liquid dispersion having 5% by mass or greater of the organic pigment concentration; or a diluted liquid prepared by diluting the liquid dispersion, which has been condensed to have the same concentration as above, to 1.0% by mass or lower with the organic solvent. The above organic solvent to be used for dilution in particle diameter measurement is propylene glycol 1-monomethyl ether 2-acetate (referred to as PGMEA below in some cases) (bp =146°C), unless otherwise specified. The solvent for diluting the liquid dispersion obtained by the production method of the present invention is not, however, limited to the above-mentioned organic solvent. The particle diameter is measured, according to a dynamic light scattering method using

Microtrack UPA150 (trade name), manufactured by Nikkiso Co., Ltd., unless otherwise specified. Generally, it is difficult to maintain the fine particle diameter of the pigment fine-particles in the organic pigment liquid dispersion condensed, which is similar when the condensed dispersion is diluted again. The particle diameter of the organic pigment fine-particles in the present invention is preferably within the range from 1 to 120 nm, more preferably from 3 to 100 nm, and particularly preferably from 5 to 70 nm, as the particle diameter after the condensation measured by adjusting the concentration to 1.0% by mass after the condensation as described in the above.

The uniformity of the particle diameters of the fine-particles, namely the monodispersed fine-particle system is an important factor determining the performance of the particles, not only meaning the uniformity of the sizes of the included particles, but also meaning without any variation between the chemical composition and crystal structure in the particles. Particularly, the uniformity is regarded as an important factor dominating characteristic of the particles in ultrafine particles having particle diameters of nanometer size. According to the producing method of the present invention, it is possible not only to prepare the fine-particles of small particle diameters, but also to control and equalize the sizes. There are various kinds of indexes showing that particle sizes of the fine-particles are uniform. In the present invention, an MV/MN value obtained by dividing the volume average diameter MV by the number average diameter MN is used as the index showing monodispersity (meaning that particle diameter distribution is narrow). When this MV/MN value is close to 1, it shows that the particles are excellent in monodispersity. The monodispersity of the organic pigment fine-particles in the present invention is defined as the value sought from the particle diameter after condensation measured after adjusting the concentration to 1% by mass after condensation as described above, unless otherwise specified. In the present invention, the MV/MN value is preferably within the range from 1.20 to 1.80, more preferably from 1.20 to 1.60, and particularly preferably from 1.20 to 1.40.

The features of the organic pigment fine-particles liquid dispersion obtained according to the present invention, resides in hardly blocking the cannel, in small particle diameters and variation of particle diameter distribution after condensation, and in excellent dispersion stability. Such a liquid dispersion is extremely advantageous when ink-jet inks for UV or paints are prepared by using the liquid dispersion, and switching or the like of the solvent is also widely possible. Such a property is the property extremely excellent for the liquid dispersion. The property is presumed as being originated from the suppression of aggregation between fine particles caused from an interaction of the pigment fine-particles and the compound represented by formula (I) with a hydrogen bond between those.

According to the production method of the present invention, via the flow reaction without any blocking of the channel, favorable organic pigment fine-particles can be produced, with controlling the reaction time, and further with utilizing precision on the reaction temperature control in a small space. Further, in comparison with the conventional batch method (reaction in a flask, etc.), organic fine-particles with smaller particle diameters and with more uniform particle diameters can be produced. Furthermore, utterly different from the conventional techniques, by numbering up (by taking parallel arrangement) of such channels, the above excellent organic pigment fine-particles can be produced with scaling up, with good reproducibility, but without loosing the above excellent fine-particle characteristics, thereby to make it possible to remarkably reduce the lead time in production.

The liquid dispersion of the organic pigment fine-particles prepared by the production method of the present invention can be favorably used as an ink-jet ink and a paint. Also, the liquid dispersion can be used as an ingredient liquid for color filters.

According to the producing method of the present invention, excellent organic pigment fine-particles can be produced, by a flow reaction using a channel, with controlling the reaction time, further by utilizing preciseness on the reaction temperature control in a small space. Further, by numbering up (by taking parallel arrangement) of channels, the organic pigment fine-particles can be produced continuously and stably, in a scaled-up large amount, with good reproducibility, without losing the above excellent fine-particle characteristics.

According to the present invention, by numbering up (by taking parallel arrangement) of flow reactors, such as microreactors, the organic pigment fine-particles with a small particle diameter and a narrow particle diameter distribution, and the organic solvent liquid dispersion of the fine-particles, can be produced in a mass scale, with good reproducibility, without losing the above excellent fine-particle characteristics. Still further, the liquid dispersion of the organic pigment fine-particles prepared according to the production method of the present invention, is useful as UV curing-type ink-jet inks, color filters for CCD sensors, high luminance paints, and colorants, such as coating materials or the like, and the liquid dispersion can improve or enhance the properties of those products.

## EXAMPLES

The present invention will be described in more detail based on the following examples, but the invention is not intended to be limited thereto. In the following examples and comparative examples, the particle diameter and particle diameter distribution of organic pigment particles were measured, using Microtrack UPA150 (trade name), manufactured by Nikkiso Co., Ltd., unless otherwise specified. Additionally, TG/DTA was measured using EXSTAR 6000 TG/DTA 6200 (trade name), manufactured by SII NanoTechnology.

(Synthetic example 1) Synthesis of Exemplified compound (I-1)

An acetonitrile solution (250 ml) of 25 g (0.3 mol) of 3-aminopyrazole (manufactured by Tokyo Kasei Kogyo Co., Ltd.) was refluxed under heating, and thereto 106.5 g (0.3 mol) of oleoyl chloride (manufactured by Tokyo Kasei Kogyo Co., Ltd.) was added dropwise over about 1 hour. After the completion of the dropwise addition, the resultant mixture was continued to reflux under heating for about 1 hour, and then when the temperature was returned to room temperature, crystals were obtained by precipitation. The crystals were filtered off by aspiration filtration, followed by washing with ethyl acetate. Since the crystals were hydrochloride of Exemplified compound (I-1), the crystals were poured into water, followed by neutralization with a saturated aqueous solution of sodium hydrogencarbonate, while stirring the mixture. The resultant mixture was subjected to extraction with ethyl acetate, followed by condensation, and the thus-obtained crystals were recrystallized from acetonitrile, to give 69 g (66 %) of Exemplified compound (I-1). The molecular weight 347.54.

(Synthetic example 2) Synthesis of Exemplified compound (I-4)

Ethyl 4-pyrazolecarboxylate (manufactured by Aldrich) in an amount of 14.0 g (0.1 mol) and 3-(2,4-di-t-pentylphenoxy)propylamine (manufactured by Wako Pure Chemical Industries, Ltd.) in an amount of 29.1 g were mixed each other in the absence of any solvent, and the resultant mixture was heated under a reduced pressure (to 5 mmHg) up to 150°C. The volatile components generated (almost all was ethanol) was trapped with a cooled trap (with acetone/dry ice). After about 5 hours, the reaction product was cooled to room temperature, and after pouring acetonitrile to the resultant solid, the resultant mixture was dissolved by heating, followed by cooling to room temperature slowly. The thus-formed crystals were filtered by aspiration filtration, to give 23 g (60 %) of Exemplified compound (I-4). The molecular weight 385.54.

(Synthetic example 3) Synthesis of Exemplified compound (I-7)

An acetonitrile solution in an amount of 200 ml containing 10.0 g (0.12 mol) of 3-amino-1,2,4-triazole (manufactured by Wako Pure Chemical Industries, Ltd.) was refluxed by heating under nitrogen gas flow. Therein, 33.6 g (0.10 mol) of 1-(2,4-di-t-pentylphenoxy)butanoyl chloride (manufactured by Fujifilm Corporation) was added dropwise over about 30 minutes. After the completion of the dropwise addition, the resultant mixture was refluxed under heating for about 2 hours, and then the temperature was returned to room temperature. After leaving the resultant mixture to stand overnight, the mixture caused crystallization by stirring, and the crystals were filtered by aspiration filtration and washed with acetonitrile. Since the crystals were hydrochloride of Exemplified compound (I-7), the crystals were poured into ethyl acetate and water, followed by adding an aqueous 50% potassium hydroxide solution with a pipette, while stirring, to adjust the pH of the resultant aqueous solution to about 10. Then, the resultant solution was subjected to extraction with ethyl acetate, followed by drying over barium sulfate, filtration, and condensation. The thus-obtained crystals were recrystallized from a n-hexane/ethyl acetate-series solvent, to give 19.0 g (50 %) of Exemplified compound (I-7) as colorless crystals. The molecular weight 386.53.

(Example 1)

In 99 g of propylene glycol 1-monomethyl ether 2-acetate, 1.0 g of Exemplified compound (1) (protecting group: $-C(=O)-O-C(CH_3)_3$, elimination initiation temperature (decomposition initiation temperature by TG/DTA measurement): 150°C), which is an organic pigment precursor of PR254, was dissolved, under slightly heating while stirring, and then the temperature of the resultant mixture was returned to room temperature. Thereto, 2.0 g of Exemplified compound (I-1) synthesized in Synthetic example 1, and 0.2 g of a block copolymer-type dispersing agent (DISPERBYK-166 (trade name), manufactured by BYK Chemie) as a polymer dispersing agent, were added. The resultant mixture was filtered through a 0.45-μm microfilter (manufactured by Fujifilm Corporation), to remove impurities such as foreign particles, thereby to obtain a IA liquid. As the reactor capable of heating and cooling, as shown in Fig. 1, the reactor body 10 was provided, which was made of ceramics, in which the channel 13 (equivalent diameter 300 μm) was formed with the channel width (W) and depth (H) each 300 μm, the length of the channel region "a" 2 cm, the length of the channel region "b" 2 cm, and the length of the channel region "c" 5 cm. To the reactor 10, two tubes made of Teflon (registered trademark) were connected to the inlet 11 with a check-valve connector. At the tip of each tube, the tubes each were connected to a syringe filled with the IA liquid, and the syringes each were set to a pump. Separately, the outlet 12 was connected with a connector having a pressure controlling valve therebetween, and a tube made of Teflon (registered trademark) was connected to the outlet 12 via the connector. The reactor body 10 had a size of 12 cm × 6 cm × 10 mm. The heater 14 of size 2 cm × 1 cm × 1 mm was integrally built in the reactor, when producing the reactor by sintering ceramics of green state. The heater was wired to a power source at the outside of the reactor. To a space of

5 cm x 1 cm x 5 mm in the reactor, the Peltier device 15 of the cooler was fitted. The solution flowing in the channel 13 was heated to 300°C with the heater 14 turned on, and then cooled to 25°C by cooling with the Peltier device 15. The temperature was controlled with a sensor. The IA liquid was injected from the inlet 11 at a flow rate of 20 μL/min. As a result, a liquid dispersion of 1-methoxy-2-propyl acetate containing fine-particles of PR254 was obtained from the outlet 12. The injection was continued for 120 minutes, and the resultant liquid dispersion was collected at the tip of the tube. During this operation, no blocking of the channel was observed. Then, the particle diameter distribution of the fine-particles in the thus-obtained liquid dispersion was measured with a dynamic light scattering particle-size measuring device. As a result, MV (volume average diameter) was 45 nm, and the NW/MN value, which is an index of monodispersity, was 1.55 (MN: number average diameter). Further, almost no change was observed with respect to the MV and the MV/MN value, after the thus-obtained liquid dispersion had been left for one month at room temperature.

(Comparative Example 1)

The pigment precursor (Exemplified compound (1)) was subjected to thermal decomposition in the same manner as in Example 1, except that Exemplified compound (I-1) was not used, and as a result, blocking of the channel occurred about 10 minutes after the injection. Further, the particle diameter distribution of the fine particles in the liquid dispersion collected before blocking was measured using a dynamic light scattering particle size measuring apparatus, and MV was 125 nm. Further, the MV/MN value that is an index of monodispersity was 2.55. Furthermore, precipitation of aggregates was observed, after the thus-obtained liquid dispersion had been left for one month at room temperature.

(Example 2)

In 99 g of 1-methoxy-2-propyl acetate, 1.0 g of an organic pigment precursor of PR254 (Exemplified compound (12), protecting group $-C(=O)-O-C(CH_3)_2C_2H_5$, elimination initiation temperature (decomposition initiation temperature by TG/DTA measurement) 153°C), was dissolved, under slightly heating with stirring, and then the temperature of the resultant mixture was returned to room temperature. Thereto, 2.0 g of Exemplified compound (I-4) synthesized in Synthetic example 2, and 0.2 g of a block copolymer-type dispersing agent (DISPERBYK-166 (trade name), manufactured by BYK-Chemie) as a polymer dispersing agent, were added. The resultant mixture was filtered through a 0.45-μm microfilter (manufactured by Fujifilm Corporation), to remove impurities such as foreign particles, to obtain a IB liquid. Separately, 1-methoxy-2-propyl acetate that would be a high temperature fluid was provided as a II liquid. Using the flow reactor as illustrated in Fig. 3, the IB liquid was placed in the organic pigment precursor tank 101, and the liquid was fed to the T connector 108 via the channel 104.

On the other hand, the II liquid was placed in the contact fluid tank 102, and the liquid was fed to the T connector 108 via the channel 107, thereby to bring the II liquid into contact with the above Liquid I at the contact part 109d of the T connector. The equivalent diameters of the channels 104, 105, and 106 were each 300 μm. In this occasion, the I liquid was preheated at the heating tank 112, and the temperature was adjusted to about 100°C at the just before contacting part 109a of the T connector. The I liquid was made to flow with a flow velocity of 100 μl/min. On the other hand, the II liquid was preheated at the heating tank 113, and the temperature was adjusted to about 300°C at the just before contacting part 109b of the T connector. The II liquid was made to flow with a flow rate of 1 ml/min. The just after mixing portion 109c of the T connector and the channels following were soaked into the oil bath with temperature 300°C, and the length of the heating channel after passing the T connector until arriving at the cooling tank 114 was set to be about 10 cm. The cooling tank 114 was an oil bath with temperature -25°C. The pressure loss increase after driving the flow reactor for 120 minutes continuously was suppressed to 10 kPa or less in the entire flow reactor 10.

The MV of the pigment fine-particles contained in the pigment liquid dispersion collected to the collecting tank 3, was 40 nm; and the MV/MN value, a monodispersity index, was 1.65. Further, almost no change was observed with respect to the MV and the MV/MN value, after the thus-obtained liquid dispersion had been left for one month at room temperature.

(Comparative Example 2)

The pigment precursor (Exemplified compound (12)) was subjected to thermal decomposition in the same manner as in Example 2, except that Exemplified compound (I-4) was not used, and as a result, blocking of the channel occurred about 20 minutes after the injection. Further, the particle diameter distribution of the fine particles in the liquid dispersion collected before blocking was measured using a dynamic light scattering particle size measuring apparatus, and MV was 110 nm. Further, the MV/MN value that is an index of monodispersity was 2.30. Furthermore, precipitation of aggregates was observed, after the thus-obtained liquid dispersion had been left for one month at room temperature.

(Example 3)

The pigment fine-particles were prepared in the same manner as in Example 2, except that Exemplified compound (12) was replaced to the same amount of Exemplified compound (13) which is an organic pigment precursor of PR122 (whose protecting group: $-C(=O)-O-C(CH_3)_2C_2H_5$, elimination initiation temperature (decomposition initiation temperature in TG/DTA measurement): 165°C), and that Exemplified compound (I-4) was replaced to the same amount of Exemplified compound (I-7) obtained in Synthetic example 3. The MV of the organic pigment fine-particles in the pigment liquid dispersion collected to the collecting tank 103 was 42 nm, and the MV/MN value, an index of monodispersity, was 1.40. The pressure loss increase after continuous driving for 120 minutes was 10 kPa or smaller. Further, almost no change was observed with respect to the MV and the MV/MN value, after the thus-obtained liquid dispersion had been left for one month at room temperature.

(Comparative Example 3)

The pigment precursor (Exemplified compound (12)) was subjected to thermal decomposition in the same manner as in Example 3, except that Exemplified compound (I-4) was not used, and as a result, blocking of the channel occurred about 20 minutes after the injection. Further, the particle diameter distribution of the fine particles in the liquid dispersion collected before blocking, was measured using a dynamic light scattering particle size measuring apparatus, and MV was 130 nm. Further, the MV/MN value that is an index of monodispersity was 2.45. Furthermore, precipitation of aggregates was observed, after the thus-obtained liquid dispersion had been left for one month at room temperature.

(Example 4)

The pigment fine-particles were prepared in the same manner as in Example 2, except that Exemplified compound (12) was replaced to the same amount of Exemplified compound (16) which is an organic pigment precursor (protecting group: $-C(=O)-O-C(CH_3)_3$, elimination initiation temperature (decomposition initiation temperature in TG/DTA measurement): 170°C). The MV of the organic pigment fine-particles in the pigment liquid dispersion collected to the collecting tank 103 was 48 nm; and the MV/MN value, an index of monodispersity, was 1.38. The pressure loss increase after driving for 120 minutes continuously was 10 kPa or smaller. Further, almost no change was observed with respect to the MV and the MV/MN value, after the thus-obtained liquid dispersion had been left for one month at room temperature.

(Comparative Example 4)

The pigment precursor (Exemplified compound (16)) was subjected to thermal decomposition in the same manner as in Example 4, except that Exemplified compound (I-4) was not used, and as a result, blocking of the channel occurred about 25 minutes after the injection. Further, the particle diameter distribution of the fine particles in the liquid dispersion collected before blocking, was measured using a dynamic light scattering particle size measuring apparatus, and MV was 110 nm. Further, the MV/MN value that is an index of monodispersity was 2.10. Further, precipitation of aggregates was observed, after the thus-obtained liquid dispersion had been left for one month at room temperature.

(Comparative Example 5)

Compound (A) for comparison was synthesized, according to the method described in Synthetic example 1, by using N-(3-aminopropyl)imidazole, manufactured by Wako Pure Chemical Industries, Ltd.

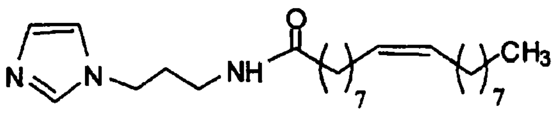

**Compound for comparison (A)**

The pigment precursor (Exemplified compound (12)) was subjected to thermal decomposition in the same manner as in Example 2, except that Exemplified compound (I-4) was replaced to Compound (A) for comparison in the same amount, and as a result, blocking of the channel occurred about 30 minutes after the injection. Further, the particle diameter distribution of the fine particles in the liquid dispersion collected before blocking, was measured using a dynamic light scattering particle size measuring apparatus, and MV was 90 nm. Further, the MV/MN value that is an index of monodispersity was 2.05. Further, precipitation of aggregates was observed, after the thus-obtained liquid dispersion had been left for one month at room temperature.

(Comparative Example 6)

Compound (B) for comparison was synthesized, according to the method described in Synthetic example 1, by using 3-aminopyridine, manufactured by Wako Pure Chemical Industries, Ltd.

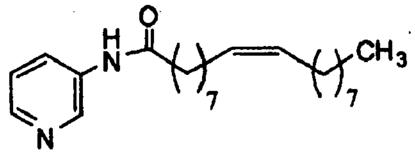

**Compound for comparison (B)**

The pigment precursor (Exemplified compound (12)) was subjected to thermal decomposition in the same manner as in Example 2, except that Exemplified compound (I-4) was replaced to Compound (B) for comparison in the same amount, and as a result, blocking of the channel occurred about 20 minutes after the injection. Further, the particle diameter distribution of the fine particles in the liquid dispersion collected before blocking, was measured using a dynamic light scattering particle size measuring apparatus, and MV was 95 nm. Further, the MV/MN value that is an index of monodispersity was 2.20. Further, precipitation of aggregates was observed, after the thus-obtained liquid dispersion had been left for one month at room temperature.

(Comparative Example 7)

Compound (C) for comparison was synthesized, using a 75% aqueous solution of 1-(2-hydroxyethyl)imidazolidinone (manufactured by Aldrich), in ethyl acetate/water, using sodium carbonate as a base, according to the two-phase-system Schotten-Baumann reaction.

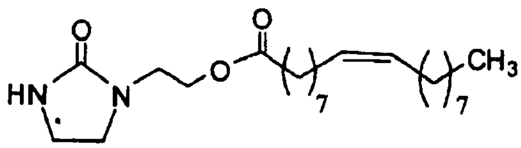

**Compound for comparison (C)**

The pigment precursor (Exemplified compound (12)) was subjected to thermal decomposition in the same manner as in Example 2, except that Exemplified compound (I-4) was replaced to Compound (C) for comparison in the same amount, and as a result, blocking of the channel occurred about 25 minutes after the injection. Further, the particle diameter distribution of the fine particles in the liquid dispersion collected before blocking, was measured using a dynamic light scattering particle size measuring apparatus, and MV was 105 nm. Further, the MV/MN value that is an index of monodispersity was 2.10. Further, precipitation of aggregates was observed, after the thus-obtained liquid dispersion had been left for one month at room temperature.

(Example 5)

The liquid dispersion obtained in Example 2 was condensed with an evaporator (water bath temperature: 50°C), to give a solid residue (a condensate of the liquid dispersion). The concentration of the pigment in the solid content was about 30% by mass. The resultant solid content in an amount of 1 g was added in 50 g of 1-methoxy-2-propyl acetate, and the resultant mixture was subjected to ultrasonic dispersion (with an ultrasonic homogenizer VC750/CV33 (trade name), manufactured by SONICS) for one hour. The particle diameter of the thus-obtained liquid dispersion was measured, to show MV = 45 nm and MV/MN = 1.70.

(Example 6)

The liquid dispersion obtained in Example 2 was washed sufficiently, through a ceramic filter, while supplying 1-methoxy-2-propyl acetate (to remove excess azole components), followed by concentrating with discontinuing the supply of 1-methoxy-2-propyl acetate. As a result of the above operation, the liquid dispersion with the pigment concentration of about 10% by mass was obtained. The thus-obtained liquid dispersion was diluted to about 10 times with 1-methoxy-2-propyl acetate, and the particle diameter thereof was measured, to show MV = 43 nm and MV/MN = 1.65,

which exhibited almost no changes compared with those values before the condensation.

As is apparent from the above results, according to the present invention, it is possible to obtain organic pigment fine-particles which are minute in nanometer size and are uniform in the particle size, by converting an organic pigment precursor to an organic pigment, in the co-existence of a specific compound having an azole ring in the molecule; and also to obtain a liquid dispersion of the organic pigment fine-particles which dispersion is high in dispersion stability. Further, according to the production method of the present invention, it is possible to realizes the continuous production of the organic pigment fine-particles extremely efficiently and stably, with suppressing blocking of the reaction channel, by allowing the specified compound having an azole ring in the molecule to coexist in the flowing liquid, when conducting the conversion of the organic pigment precursor with the flow reactor.

Having described our invention as related to the present embodiments, it is our intention that the invention not be limited by any of the details of the description, unless otherwise specified, but rather be construed broadly within its spirit and scope as set out in the accompanying claims.

## Claims

1. A method of producing organic pigment fine-particles, which comprises:

   providing an organic pigment precursor soluble in a solvent and a compound having an azole ring; and converting the organic pigment precursor to an organic pigment fine-particle in the presence of the compound having an azole ring.

2. The method of producing organic pigment fine-particles according to Claim 1, wherein the compound having an azole ring is represented by formula (I):

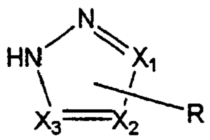

**Formula** ( I )

   wherein $X_1$, $X_2$ and $X_3$ each independently represents a carbon atom or a nitrogen atom, and at least one of them represents a carbon atom; and R represents a substituent having 6 or more carbon atoms, and R bonds to any one of $X_1$, $X_2$ or $X_3$ of being a carbon atom.

3. The method of producing organic pigment fine-particles according to Claim 1 or 2, wherein two or more of $X_1$, $X_2$ and $X_3$ in formula (I) each represents a carbon atom.

4. The method of producing organic pigment fine-particles according to any one of Claims 1 to 3, wherein the molecular weight of the compound having the azole ring in the molecule is within the range from 100 to 1,000.

5. The method of producing organic pigment fine-particles according to any one of Claims 1 to 4, wherein the organic pigment precursor is a compound convertible to the organic pigment through a thermal reaction.

6. The method of producing organic pigment fine-particles according to any one of Claims 1 to 5, wherein the organic pigment precursor is represented by formula (II):

   A[-C(=O)-O-Ra]x Formula (II)

   wherein A represents a group to give an organic pigment, Ra represents an aliphatic group; and x represents an integer of 1 to 8.

7. The method of producing organic pigment fine-particles according to any one of Claims 1 to 6, wherein a solution of the organic pigment precursor is introduced into a channel of a flow reactor and the organic pigment precursor is converted to the organic pigment by a heating reaction in the flow process when the organic pigment precursor is converted to the organic pigment.

**8.** The method of producing organic pigment fine-particles according to Claim 7, wherein the organic pigment precursor is converted to the organic pigment while flowing under the condition of being heating to 150°C or higher.

**9.** The method of producing organic pigment fine-particles according to Claim 7 or 8, wherein the flow reactor has a channel of an equivalent diameter of 1 mm or less.

**10.** The method of producing organic pigment fine-particles according to Claim 9, wherein the reactor having the channel of an equivalent diameter of 1 mm or less is a microreactor.

**11.** The method of producing organic pigment fine-particles according to any one of Claims 1 to 10, wherein the organic pigment fine-particles are produced as a liquid dispersion thereof.

**12.** Organic pigment fine-particles produced by the method according to any one of Claims 1 to 11.

**13.** A liquid dispersion of organic pigment fine-particles produced via the method according to any one of Claims 1 to 11.

**14.** A composition of organic pigment fine-particles, **characterized in that** the composition contains:

fine particles of an organic pigment; and
a compound having an azole ring as represented by formula (I):

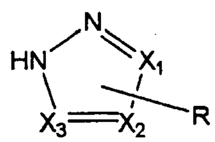

**Formula** ( I )

wherein $X_1$, $X_2$ and $X_3$ each independently represents a carbon atom or a nitrogen atom, and at least one of them represents a carbon atom; and R represents a substituent having 6 or more carbon atoms, and R bonds to any one of $X_1$, $X_2$ or $X_3$ of being a carbon atom.

**15.** The composition of organic pigment fine-particles according to Claim 14, wherein the organic pigment is at least one selected from the group consisting of a diketo pyrrolic compound, a quinacridone compound, and an azo compound.

*Fig. 1*

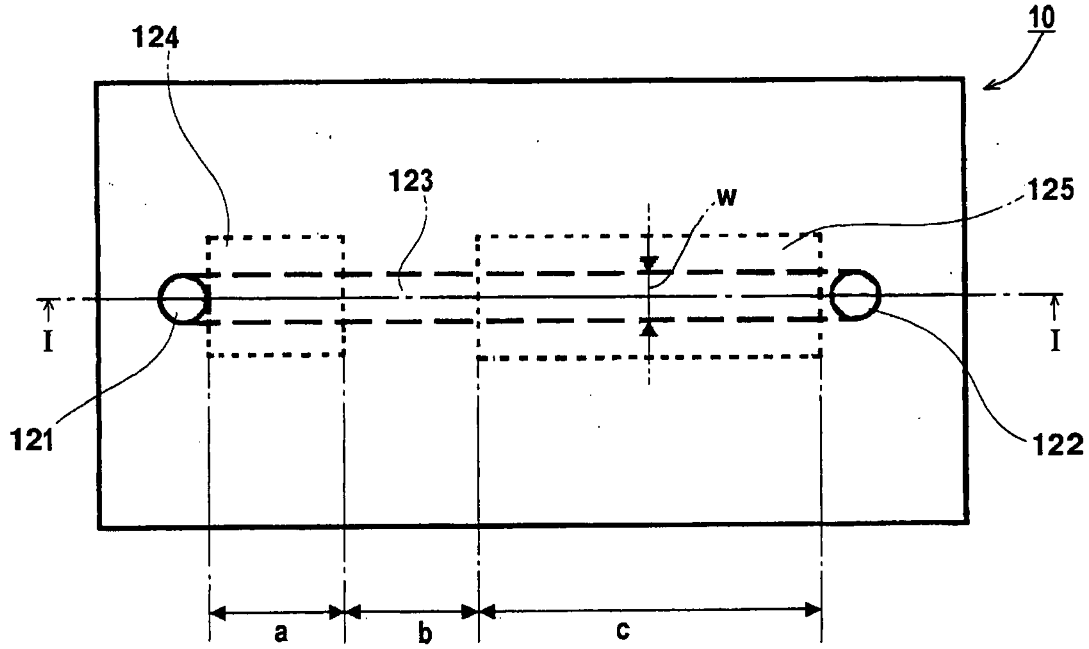


*Fig. 2*

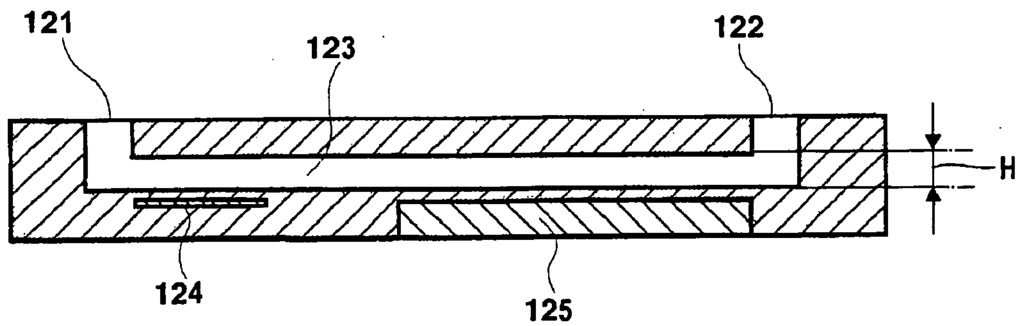

*Fig. 3*

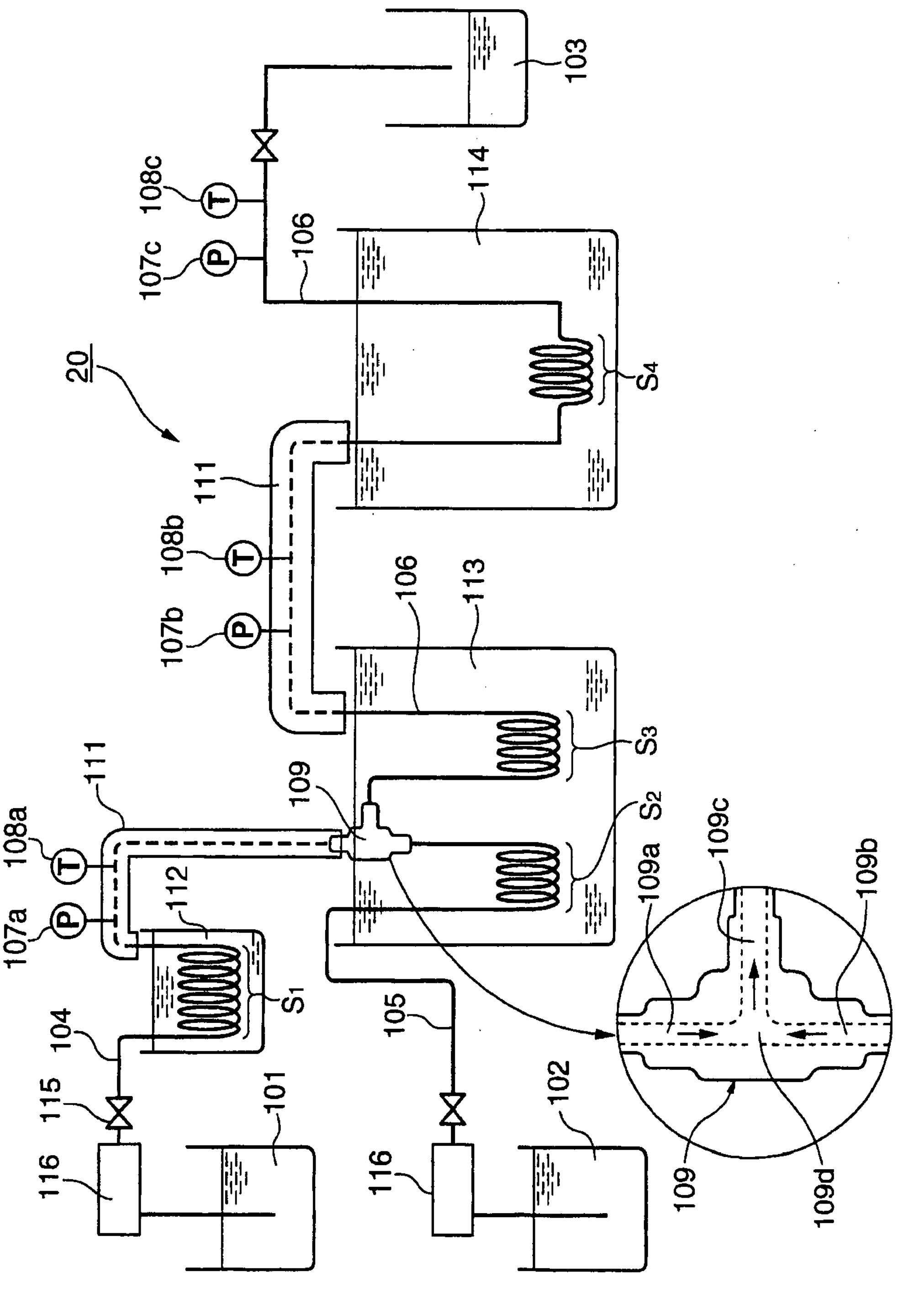
20
101
102
103
104
105
106
107a
107b
107c
108a
108b
108c
109
109a
109b
109c
109d
111
112
113
114
115
116
S1
S2
S3
S4
P
T

*Fig. 4*

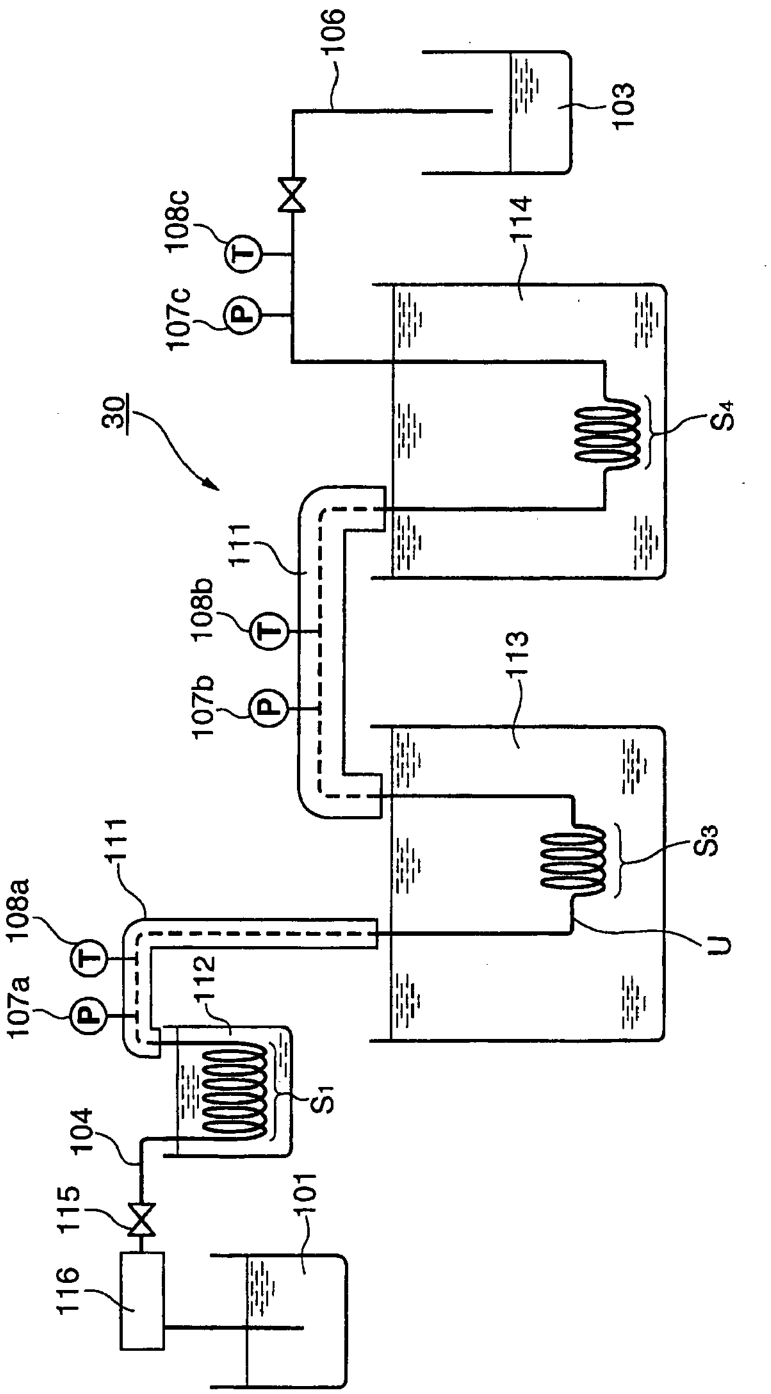
106
103
108c
107c
114
30
S4
111
108b
107b
113
S3
U
111
108a
107a
112
S1
104
115
116
101

*Fig. 5-1*

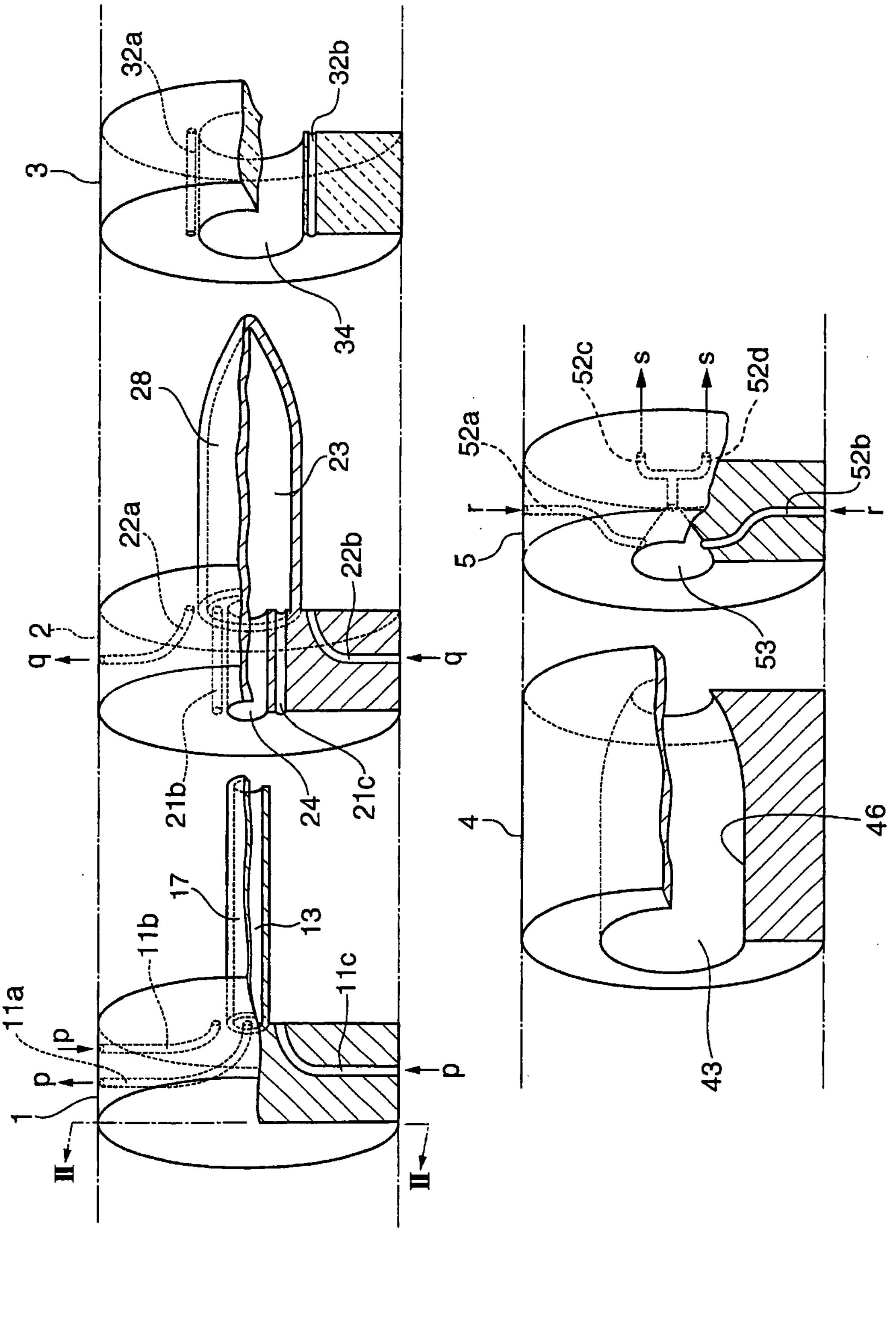
3
32a
32b
34
28
23
22a
22b
q
2
21b
24
21c
17
13
11a
11b
11c
p
1
II
52a
52b
52c
52d
s
r
5
53
4
43
46

*Fig. 5-2*

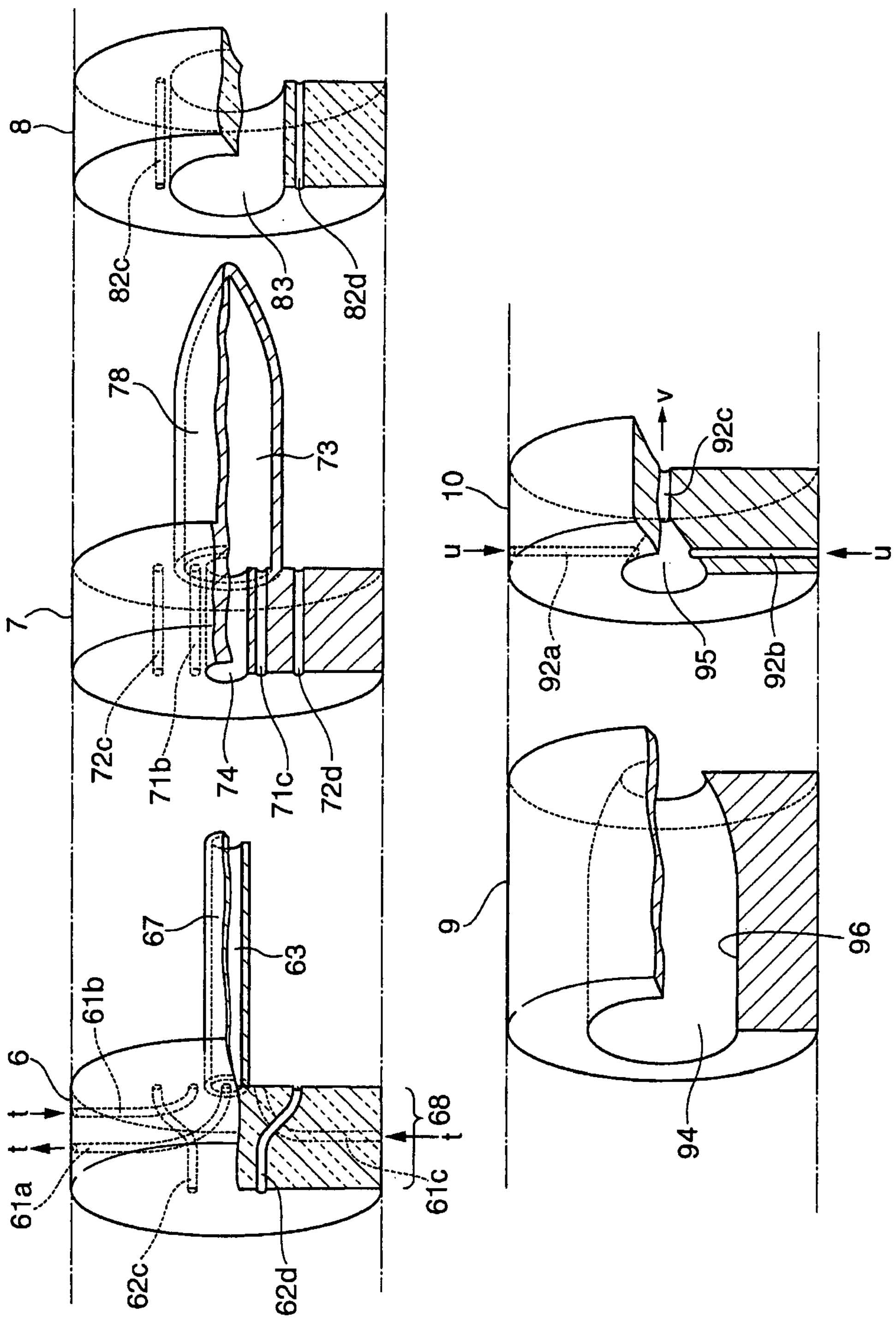
8
82c
83
82d
78
73
7
72c
71b
74
71c
72d
6
61b
67
63
61a
62c
62d
61c
68
t
10
u
v
92c
92a
95
92b
9
96
94

*Fig. 6*

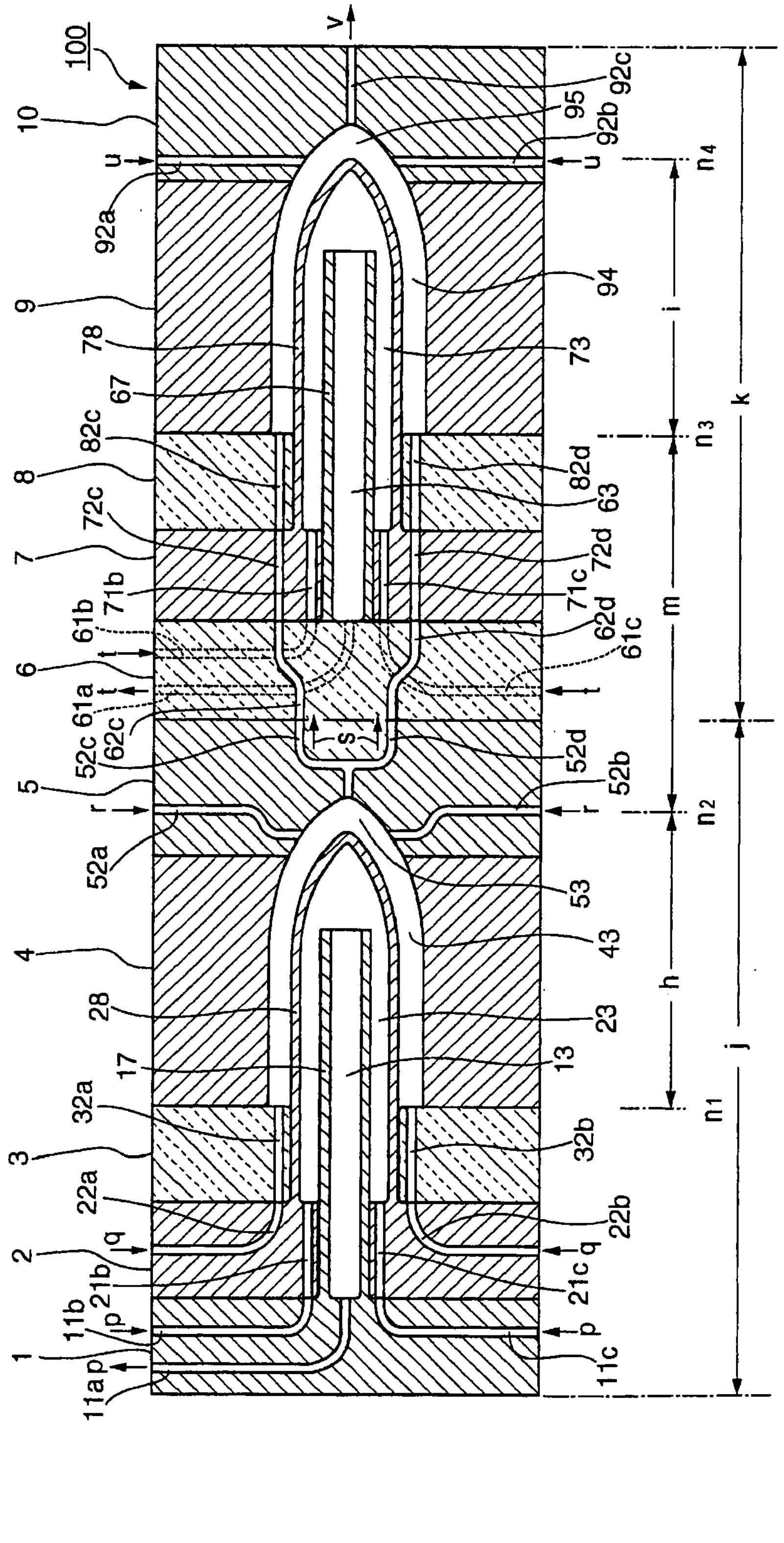

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007284665 A
- JP 2000007677 A
- JP 9003362 A
- WO 9832802 A
- WO 9845757 A
- WO 9858027 A
- WO 9901511 A
- JP 11092695 A
- JP 11310726 A
- JP 8006242 A
- JP 2005055495 A
- JP 2006342304 A
- JP 2003210960 A
- JP 2003210963 A
- JP 2003210959 A


### Non-patent literature cited in the description


- *Nature,* 1997, vol. 388, 131
- Novel Lecture about Experimental Chemistry. MARUZEN, 1978, vol. 14, 2135-2293
- Chemical Engineering Handbook. Asakura Publishing Company Ltd, 2004, 37
- Chemical Engineering Handbook. Soc. of Chemical Engineers, Japan Ed., Maruzen Co., Ltd,
- Dictionary of Science and Chemistry. Iwanami Shoten
- **M. Engler et al.** Effective Mixing by the Use of Convective Micro Mixers. *Conference Proceedings,* 2005
- **Nippon Kikai Gakkai.** Kikai Kougaku Jiten. Maruzen, K. K, 1997